(19) **Europäisches Patentamt / European Patent Office / Office européen des brevets**

(11) **EP 2 406 962 B1**

(12) **FASCICULE DE BREVET EUROPEEN**

(45) Date de publication et mention
de la délivrance du brevet:
**07.10.2015 Bulletin 2015/41**

(21) Numéro de dépôt: **10707295.1**

(22) Date de dépôt: **09.03.2010**

(51) Int Cl.:
***H04N 13/00*** *(2006.01)*

(86) Numéro de dépôt international:
**PCT/EP2010/052992**

(87) Numéro de publication internationale:
**WO 2010/103012 (16.09.2010 Gazette 2010/37)**

(54) **SYSTÈME ET PROCÉDÉ CONFIGURÉS POUR LA CAPTURE D'UNE PLURALITÉ D'IMAGES À DESTINATION D'UNE RESTITUTION MULTISCOPIQUE À DÉFORMATION CONTROLÉE**

ZUM ERFASSEN MEHRERER BILDER FÜR MULTISKOPISCHE RESTITUTION MIT GESTEUERTER DEFORMATION AUSGELEGTES SYSTEM UND VERFAHREN

SYSTEM AND METHOD ADAPTED FOR CAPTURING A PLURALITY OF IMAGES FOR MULTISCOPIC RESTITUTION WITH CONTROLLED DEFORMATION

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **09.03.2009 FR 0901078**
**09.03.2009 FR 0901077**
**09.03.2009 FR 0901073**

(43) Date de publication de la demande:
**18.01.2012 Bulletin 2012/03**

(73) Titulaires:
• **ZAYO FRANCE**
**75002 Paris (FR)**
• **UNIVERSITÉ DE REIMS CHAMPAGNE ARDENNE**
**51100 Reims (FR)**

(72) Inventeurs:
• **DEBONS, Didier**
**92110 Clichy (FR)**
• **LUCAS, Laurent**
**51140 Muizon (FR)**
• **REMION, Yannick**
**51140 Muizon (FR)**

(74) Mandataire: **Regimbeau**
**20, rue de Chazelles**
**75847 Paris Cedex 17 (FR)**

(56) Documents cités:
**EP-A- 0 425 985    EP-A- 1 085 769**
**US-A- 4 724 449**

• **DETLEF RUNDE: "How to Realize a Natural Image Reproduction using Stereoscopic Displays with Motion Parallax" IEEE TRANSACTIONS ON CIRCUITS AND SYSTEMS FOR VIDEO TECHNOLOGY, IEEE SERVICE CENTER, PISCATAWAY, NJ, US, vol. 10, no. 3, 1 avril 2000 (2000-04-01), XP011014050 ISSN: 1051-8215**

EP 2 406 962 B1

## Description

La présente invention concerne de manière générale les dispositifs de captation d'une pluralité d'images à destination d'une restitution multiscopique.

Plus particulièrement, l'invention concerne le contrôle de tels dispositifs de captation.

La présente invention concerne un système de génération d'une configuration de captation simultanée ou séquentielle d'une pluralité de n×m images d'une scène virtuelle ou réelle, permettant de déterminer des paramètres définissant une configuration de captation de cette scène en vue de sa restitution en relief sur un dispositif multiscopique (par exemple un écran utilisant un réseau lenticulaire).

L'invention s'applique notamment, mais non exclusivement, à la restitution d'images (en direct comme en différé) sur des dispositifs multiscopiques tels que, par exemple, les systèmes de projection, écrans ou afficheurs stéréoscopiques, autostéréoscopiques ou dits à « imagerie intégrale », ainsi que les photographies lenticulaires. Par ailleurs, certains de ces dispositifs de restitution visés peuvent être couplés à des moyens d'interaction directe (clavier, souris, pointeur 3D, souris 6D, ...) ou indirecte (suivi d'observateur ou « tracking » notamment) qui pourront contrôler certains des paramètres de la génération de la configuration de captation et ainsi rendre cette configuration « interactive ».

La présente invention peut être appliquée à l'utilisation de ces paramètres de configuration de captation pour générer un ou des ensemble(s) multiscopique(s) d'images de synthèse d'une même scène virtuelle en 3D, en vue d'une restitution multiscopique (affichage, projection, impression...) en différé ou en direct, locale comme à distance.

La présente invention peut également être appliquée à l'utilisation de ces paramètres de configuration de captation pour capter (ou capturer) un ou des ensemble(s) multiscopique(s) cohérent(s) d'images fixes ou animées d'une scène réelle quelconque à l'aide d'une pluralité de couples optique/capteur optoélectronique, destinés à l'affichage, la projection ou l'impression multiscopique pour une restitution en 3D relief de la scène en différé ou en direct, locale comme à distance.

La présente invention peut enfin être appliquée à l'utilisation de ces paramètres de configuration de captation pour la capture séquentielle d'une pluralité d'images d'une scène réelle quelconque, les prises de vues étant réalisées suivant un jeu de paramètres définissant une configuration de captation de cette scène, en vue de sa restitution (affichage, projection, impression ...) ultérieure en relief sur un dispositif multiscopique.

On notera que l'invention est adaptée notamment à la « captation » de scènes virtuelles ou réelle pour des applications de type « Synthèse d'Images », « Réalité Virtuelle », « Réalité Augmentée » ou « Virtualité Augmentée ».

## Etat de la technique

D'une façon générale, il est largement connu que la diffusion d'images en relief fait appel des dispositifs (par exemple anaglyphe, filtres colorés, optiques, prismes, miroirs, lunettes à occultation, film polarisant et lunettes polarisées, barrière de parallaxe ou réseau lenticulaire, notamment) permettant de séparer physiquement et/ou temporellement les images parvenant aux deux yeux d'un ou plusieurs spectateur(s).

Dans le cas de lunettes de stéréovision, deux images seulement (n=2, m=1) qui sont transportées par un même faisceau optique puis séparées physiquement (polarisation, couleur...) ou temporellement (occultation) par les lunettes du spectateur.

Par contre, dans les dispositifs dits « autostéréoscopiques », la séparation est opérée au niveau du dispositif de restitution. Dans ces derniers cas les différentes images sont restituées dans des faisceaux optiques distincts qui sont par exemple organisés en « éventail » horizontal de n images (dans ce cas n≥2 et m=1). Cet éventail horizontal est sensiblement perpendiculaire aux colonnes du dispositif supposées sensiblement perpendiculaires aux lignes joignant les yeux des spectateurs. Ces faisceaux optiques peuvent également être organisés en un ou plusieurs éventails horizontaux et verticaux (distribution matricielle de n≥2 pour la distribution horizontale, m≥2 pour la distribution verticale) transportant chacun une image distincte.

Dans la présente invention, on réfère à des « lignes » et des « colonnes » des dispositifs de restitution ou de la base commune de captation (qui sera définie ultérieurement) pour désigner les directions, respectivement, horizontales et verticales des alignements de pixels composant les lignes et colonnes des images diffusées par les dispositifs de restitution ou captées par les zones de captation parallèles à la base commune.

De même, le terme « directions principales » est également utilisé pour désigner ces directions, respectivement, horizontales et verticales (par exemple, respectivement, la largeur et la hauteur).

Ainsi, les dispositifs connus de l'état de la technique permettent de diffuser simultanément (et/ou séquentiellement) au sein d'un ou plusieurs faisceaux optiques de telle manière que chaque oeil d'un spectateur correctement positionné vis-à-vis du dispositif reçoive une image différente et cohérente (l'une des images initiales et non un mélange de ces images) permettant à son cerveau de percevoir la scène en relief. Par ailleurs, les systèmes multi-stéréoscopiques imposent plusieurs « chaînes » horizontales de plusieurs positions d'oeil privilégiées.

Un problème majeur dans le domaine de la multiscopie à partir d'images fixes ou animées, réelles et/ou virtuelles concerne le fait que la restitution par des dispositifs multiscopiques plats implique le mixage coplanaire de ces images. Ces images « transmises » par le dispositif ne sont donc pas toutes orthogonales à chaque axe de visée des utilisateurs (axes entre chaque oeil et le centre de la zone utile du dispositif). La restitution de ces images induit des déformations trapézoïdales s'il a mal (ou pas) été tenu compte de ces restitutions « de biais » lors de la capture des images. Il s'agit là de ce qu'il est courant de dénommer en stéréoscopie la « contrainte épipolaire », c'est-à-dire la nécessité, pour permettre l'appariement stéréoscopique, que les deux projections d'un même point d'une scène sur chacune des images du couple stéréoscopique soient restituées sur le dispositif multiscopique de façon à être coplanaires avec les deux yeux de l'observateur.

Afin de pallier ce problème, il est connu dans l'état de la technique des modèles de transformation entre la captation des images et la scène (réelle ou virtuelle) captée (voir en particulier Jones Graham, Lee Delman, Holliman Nicolas and Ezra David « Controlling perceived depth in stereoscopic images » Proc. SPIE Stereoscopic Displays and Virtual Reality Systems VIII et Detlef Runde « How to realize a natural image reproduction using stereoscopicdisplay with Motion Parallax » IEEE Transations On Circuits and Systems for Video Technology; IEEE Service Center Piscataway).

Dans ce domaine, on connaît également les documents EP 1 089 573, WO 2005/112474,US 2001/033327, EP 0 425 985, EP 1 085 769 et US 4 724 449 visant notamment à pallier ce problème.

Bien que l'ensemble de ces documents permettent de garantir le respect par la configuration de captation à base commune et centres optiques sur une ligne parallèle à cette base, la perception de relief, cela n'implique cependant en rien que le relief perçu reste conforme au relief initialement capté.

En d'autres termes, aucun de ces documents ne décrit la prise en compte d'une déformation souhaitée (par exemple une absence de déformation) à priori dans la détermination des paramètres de configuration.

En effet, l'absence de déformation lors de la restitution nécessite de plus une similarité image par image, des pyramides de captation avec les pyramides de restitution (mêmes angles d'ouverture horizontaux et verticaux, mêmes angles entre l'axe principal et la base rectangulaire). En cas de non similarité des pyramides de captation et de restitution (mais dans le respect d'une géométrie de captation assurant la perception de relief), le relief perçu correspond à une déformation complexe du relief initialement capté. On entendra donc par « déformation(s) », cette non-similarité des pyramides de captation et de restitution. Cette déformation peut être désirable pour mettre en oeuvre certains effets spéciaux dans certaines utilisations, comme elle peut être indésirable dans d'autres applications. A l'évidence, cela implique que captation et restitution doivent être menées de façon cohérente, que l'on souhaite ou non une maîtrise de la déformation du relief perçu. Bien évidemment la déformation souhaitée peut constituer en une déformation nulle du relief perçu.

Les solutions de l'art antérieur peuvent permettent un rendu relief mais présentent l'inconvénient que ce rendu relief n'est pas maîtrisé et donc pas forcément fidèle à la scène et/ou à la volonté de l'opérateur.

A cet effet, la présente invention a pour but de proposer un système permettant de contrôler les déformations impliquées pour une image en relief afin d'obtenir des effets a priori choisis ou une restitution fidèle du relief (c'est-à-dire avec une déformation nulle).

A cet effet, l'invention propose un système de génération d'une configuration de captation d'une pluralité d'une pluralité d'images d'une scène qui comprend les caractéristiques de la revendication 1.

Avantageusement, l'invention comprend au moins l'une des caractéristiques suivantes :

-   les données représentatives d'au moins un paramètre de configuration comportent des données représentatives d'au moins un ensemble de paramètres parmi les ensembles de paramètres suivants :

    ▪ un ensemble de paramètres, dits internes, de captation définissant directement la géométrie de captation par au moins les positions, vis-à-vis d'un repère propre au dispositif virtuel de captation, des centres optiques alignés sur la (ou les) droite(s) d'alignement des centres et les positions des zones de captation, parallèles entre elles et orientées de façon à ce que leurs lignes soient parallèles à ces droites d'alignement des centres,
    ▪ un ensemble de paramètres, dits externes, de captation définissant ou permettant d'identifier la géométrie de captation à partir du point de convergence, par au moins les dimensions de la base commune centrée sur le point de convergence, le positionnement de la ou des droites d'alignement des centres, le positionnement des centres optiques sur ces droites d'alignement des centres et la position des plans parallèles à la base commune contenant les zones de captation,
    ▪ un ensemble de paramètres de déformation définissant des déformations envisageables pour la restitution en relief de la scène.

-   les données représentatives d'au moins un paramètre de configuration comportent des données représentatives d'au moins un paramètre parmi les paramètres de déformation suivants, définissant des transformations entre l'espace initial de la scène et l'espace de restitution par :

- au moins un facteur $k_i$ de grossissement global et notamment en profondeur,
- au moins un paramètre $\varepsilon_i$ de contrôle de la déformation non linéaire potentielle,
- au moins un taux $\mu_i$ de grossissement relatif de la largeur par rapport à la profondeur ou facteur d'anamorphose horizontal/profondeur souhaité,
- au moins un taux $\rho_i$ de grossissement relatif de la hauteur par rapport à la largeur ou facteur d'anamorphose vertical/horizontal souhaité,
- au moins un taux $\gamma_i$ de cisaillement horizontal du relief perçu,
- au moins un taux $\delta_i$ de cisaillement vertical du relief perçu par un observateur de plongementconforme à celui attendu,

- les données représentatives d'au moins un paramètre de configuration comportent des données représentatives d'un paramètre définissant un relief restitué sans aucune déformation par rapport au relief de la scène captée,
- les données représentatives d'au moins un paramètre de configuration comportent des données représentatives des paramètres externes de géométrie de captation suivants :

  - au moins un paramètre définissant, relativement à la base commune, le positionnement de la ou des droite(s) d'alignement des centres,
  - au moins un paramètre définissant les positionnements des centres optiques sur ces droites d'alignement des centres,
  - au moins un paramètre définissant directement ou indirectement les dimensions de la base commune,
  - au moins un paramètre définissant la position précise de chaque plan parallèle à la base commune portant au moins une zone de captation,

- les données représentatives d'au moins un paramètre de configuration comportent des données représentatives des paramètres internes de géométrie de captation suivants :

  - au moins un paramètre définissant les positionnements des centres optiques vis-à-vis d'un repère propre à la captation,
  - au moins un paramètre définissant l'orientation de l'axe de visée de chaque pyramide de projection (ou axe principal),
  - au moins un paramètre définissant la géométrie de la pyramide de projection effective de chaque zone de captation,

- tout ou partie des ensembles de données à partir desquels le module de configuration détermine ladite configuration sont variables au cours du temps, grâce à des données provenant des moyens de mémorisation et/ou de communication interne ou externe et/ou de l'interface utilisateur et définissant au moins une référence temporelle pour le changement des données représentatives du ou des paramètre(s) de configuration et/ou des données représentatives du repère global de captation et/ou des données représentatives dispositif de restitution, notamment des positions d'observation choisies,

L'invention concerne également un ensemble de captation comprenant un système de génération d'une configuration de captation caractérisé en ce qu'il comprend en outre module de synthèse d'images utilisant la configuration de captation pour les positionnements des $n \times m$ centres optiques et des dimensions et positionnements des $n \times m$ zones de captation par rapport à une scène virtuelle pour la génération de $n \times m$ images ou séquences d'images de la scène virtuelle, la scène virtuelle étant statique ou dynamique.

Avantageusement, mais facultativement, l'ensemble de captation comprend au moins l'une des caractéristiques suivantes :

- le module de synthèse d'images est adapté pour utiliser également des données représentatives de la scène, soit de positionnements et de caractéristiques, statiques ou évolutifs, de constituants de la scène virtuelle tridimensionnelle, soit d'une suite d'instructions informatiques ou ordres graphiques permettant de définir ladite scène,
- des moyens de réception desdites données représentatives de la scène, lesdites données étant soit stockées dans des moyens de mémorisation locales, soit accessibles à distance via un réseau de communication,
- un second module agencé pour intercepter directement des appels faits, par exemple à une carte ou une bibliothèque graphique, lesdits appels comprenant les données représentatives de la scène et le second module étant adapté pour générer les images de synthèse à partir de ces données interceptées.

L'invention concerne également un ensemble de captation comprenant un système de génération d'une configuration de captation selon l'invention et un dispositif de captation simultanée d'une pluralité de n×m prises de vues comprenant couples optique-capteur formés par n×m optiques ayant chacune un axe optique et un centre optique associés à des moyens de positionnement utilisant la configuration de captation pour le positionnement des capteurs et/ou des optiques de chaque couple optique-capteur. L'invention concerne également un ensemble de captation comprenant un système de génération d'une configuration de captation selon l'invention et un dispositif de captation séquentielle d'une pluralité de n×m prises de vues vue d'une scène, la captation étant réalisée à l'aide d'une optique comportant un centre optique et un axe optique, montée sur au moins un support, le support étant agencé pour le déplacement de l'optique, le support comprenant des moyens de positionnement de l'ensemble optique-capteur dans une pluralité de positions successives pour la captation de la pluralité de prises de vues correspondant aux zones de captation dans chacune des positions successives.

## Brève description des dessins

D'autres particularités et avantages de la présente invention apparaîtront plus clairement à la lecture de la description ci-après, faite en référence aux dessins annexés, dans lesquels:

- la figure 1 est une représentation simplifiée du dispositif de restitution,
- la figure 2 est une représentation simplifiée de la géométrie de captation des images en vue cavalière,
- la figure 3 est une projection de la représentation de la figure 2 parallèlement à la zone de captation,
- la figure 4a est une projection de la représentation de la figure 2 parallèlement à la base commune,
- la figure 4b est une vue de dessus de la représentation de la figure 2,
- la figure 5 est une représentation simplifiée d'un système de génération selon une réalisation possible de la présente invention,
- la figure 6 est une représentation simplifiée d'un ensemble de captation selon une réalisation possible de la présente invention,
- les figures 7 et 8 sont des représentations simplifiées d'un ensemble de captation selon une réalisation possible de la présente invention.

## Description de l'invention

La présente invention est donc destinée à la génération d'une configuration de captation (détermination de paramètres d'une géométrie de captation vis à vis de la scène à capter) pour permettre ultérieurement la réalisation d'une pluralité cohérente de vues d'une même scène pour la restitution en relief de cette scène avec un relief à déformation maîtrisée (ou sans déformation) sur tout dispositif de restitution multiscopique préalablement choisi. Le terme « captation » est utilisé ici pour désigner la création ou synthèse des images à partir d'une scène virtuelle ou l'acquisition d'image d'une scène réelle. Le terme « restitution » est utilisé pour désigner l'affichage, la projection ou l'impression d'un mixage adapté des images créées ou captées (qui peut être réalisé par divers types de dispositifs multiscopiques). La captation est réalisée par la projection de la scène sur une pluralité de n×m zones de captation associées chacune à un centre optique. Dans le cas d'une scène réelle, il peut s'agir par exemple d'optiques associées chacune à un capteur optoélectronique. Dans le cas d'une scène virtuelle, cet arrangement revient à une simulation d'optiques et de capteurs virtuels placés par rapport à la scène et définissant un dispositif virtuel de captation, en fonction des paramètres que l'invention permet de déterminer.

Dans la suite de la description, l'indice i est utilisé dans la présente demande en référence à divers éléments ou paramètres pour désigner le fait que l'élément ou le paramètre concerne l'image numéro i à capter. On notera que ce terme i peut en fait correspondre à un couple de valeurs i1 (allant de 1 à n) et i2 (allant de 1 à m), comme défini ci-dessus par l'expression $i=(i_1,i_2)$ utilisée pour une définition matricielle (par exemple lorsque les paramètres sont regroupés selon m lots de n paramètres), mais que l'on peut, lorsque l'on n'a besoin de définir qu'une dimension, n'utiliser que le terme i2 pour caractériser un lot de paramètres (par exemple, lot numéro i2, compris entre 1 et m). En d'autres termes, nous utiliserons le couple (i1, i2) dans le cadre de l'utilisation de deux variables et (i2) seul dans le cadre de l'utilisation d'une seule variable.

## Géométrie de restitution

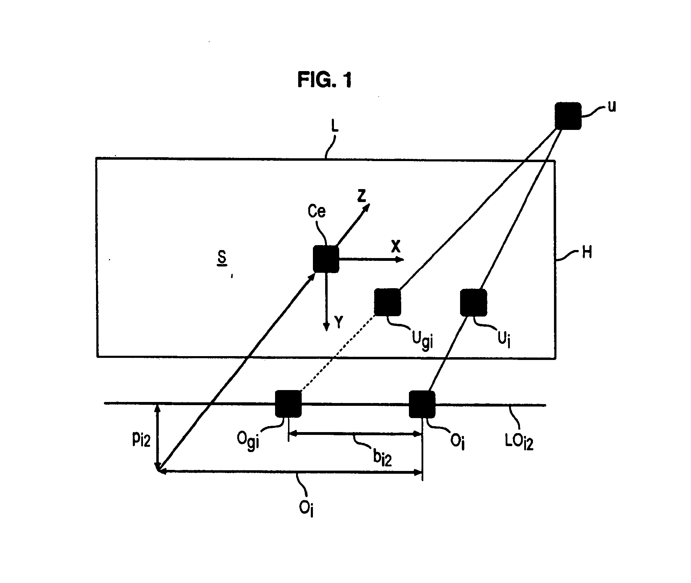

La figure 1 représente un exemple de description de la géométrie du dispositif de restitution pour lequel les images vont être générées.

Le dispositif de restitution comprend une surface de restitution S caractérisée par une largeur L et une hauteur H. Le dispositif de restitution mixe n×m images étendues par exemple sur toute sa surface de restitution. Chacune de ces images n°i=(i1,i2) $\in$ {1...n}x{1...m} est visible au moins depuis la position préférentielle choisie $O_i$ positionnée sur

une des droites $LOi_2$ d'alignement des positions d'observation choisies, parallèles aux lignes du dispositif de restitution. Cette droite $LO_{i2}$ d'alignement, et donc la position d'observation $O_i$, est située à une distance $d_{i2}$ de la surface de restitution S du dispositif qui peut être définie d'après le dispositif de restitution choisi, de façon à assurer qu'un utilisateur d'écart binoculaire $b_{i2}$, avec une ligne des yeux parallèles aux lignes du dispositif de restitution, ayant son oeil droit en $O_i$ percevant l'image n° i et son oeil gauche en $O_{gi}$ avec $g_i=i-(q_{i2},0)$ qui y percevrait donc l'image n° $g_i$. Ainsi, pour chaque droite $LO_{i2}$, sont définis deux attributs ou paramètres interdépendants :

- $b_{i2}$ l'écart binoculaire choisi pour cette position (souvent les $b_{i2}$ seront tous identiques à l'écart binoculaire humain moyen 65 mm, mais il est envisageable de choisir des écarts différents selon le public attendu : enfants, ...), et
- $q_{i2}$ l'écart de numéros d'images composant les couples stéréoscopiques cohérents visibles avec écart binoculaire $b_{i2}$ depuis les positions préférentielles de la droite $LO_{i2}$ d'alignement des positions d'observation.

Selon une caractéristique des dispositifs multiscopiques, il est possible, depuis une positon $O_i$, de continuer à percevoir du relief en se décalant verticalement (parallèlement aux colonnes de la zone utile du dispositif) plus ou moins selon que ce dispositif propose ou non une distribution verticale des images (m>1 ou m=1). Les conditions de visualisation sont ainsi définies pour une hauteur de visualisation donnée commune à toute une « chaîne » de positions d'observation, ou plutôt pour un plongement $p_{i2}$ donné qui représente l'écart vertical (parallèlement aux colonnes du dispositif) de positionnement des yeux des observateurs sur cette chaîne par rapport au centre Ce de la zone utile. Lorsque l'observateur (et donc le plongement effectif) n'est pas a priori connu, on se contente d'un plongement moyen $p_{i2}{}^m$ (correspondant à un observateur de taille moyenne à définir).

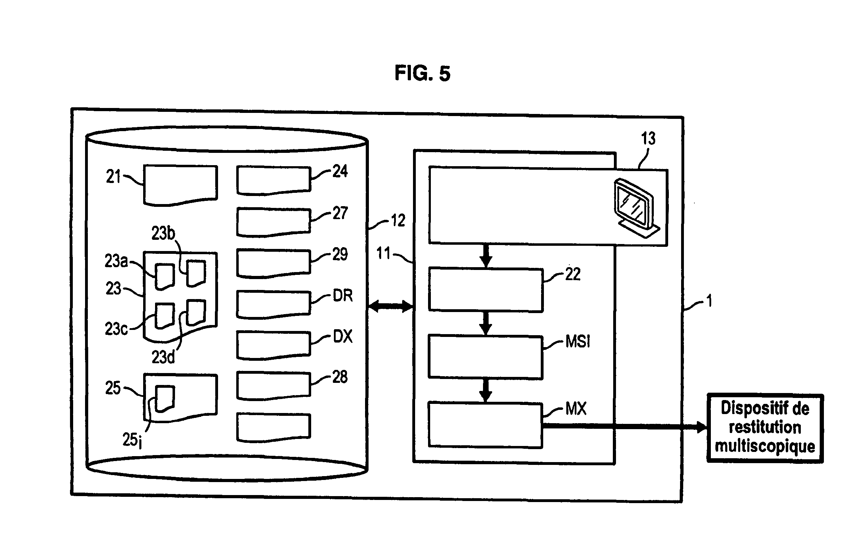

L'analyse des caractéristiques de la géométrie de restitution s'appuie sur un repère global défini par rapport au dispositif de restitution, par exemple en son centre Ce, x, y, z tel que, comme représenté sur la figure 5 :

- x est parallèle aux lignes horizontales du dispositif de restitution,
- y est parallèle aux colonnes verticales du dispositif de restitution,
- z est la profondeur, produit vectoriel des axes x et y : $z = x{\wedge}y$

Il est à noter que les positions d'observation sont souvent régulièrement espacées sur les droites $LO_{i2}$. Dans ce cas, les décalages latéraux $o_i$ des positions d'observation sur l'une de ces droites sont collectivement définis par l'une seulement de ces données et les caractéristiques associées à cette ligne: $o_i=o_{(1,i2)}+b_{i2}(i1-1)/q_{i2}$. Ainsi, il est possible de disposer de jeux de paramètres réduits qui permettent, dans ces configurations particulières, de calculer les paramètres manquants.

## Géométrie de captation

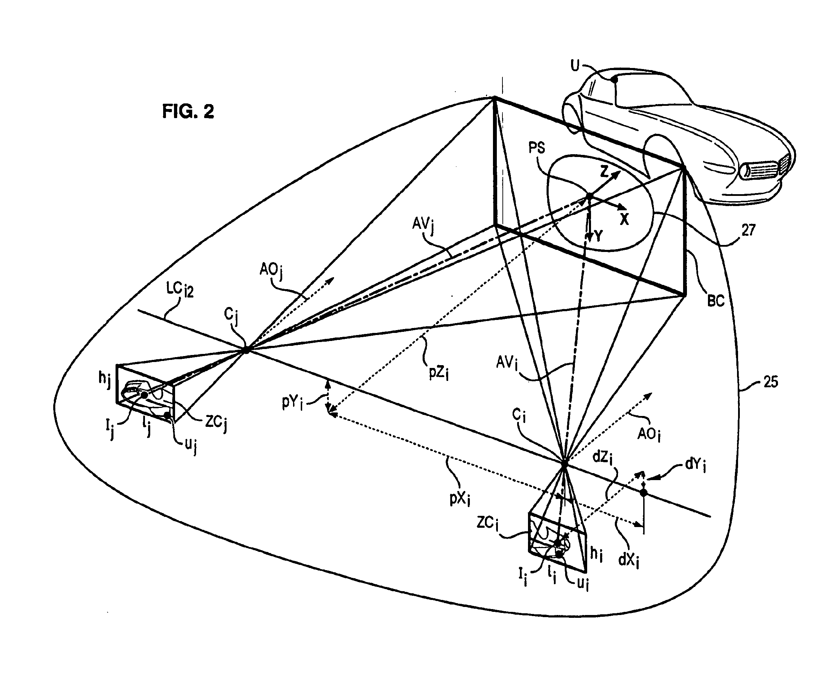

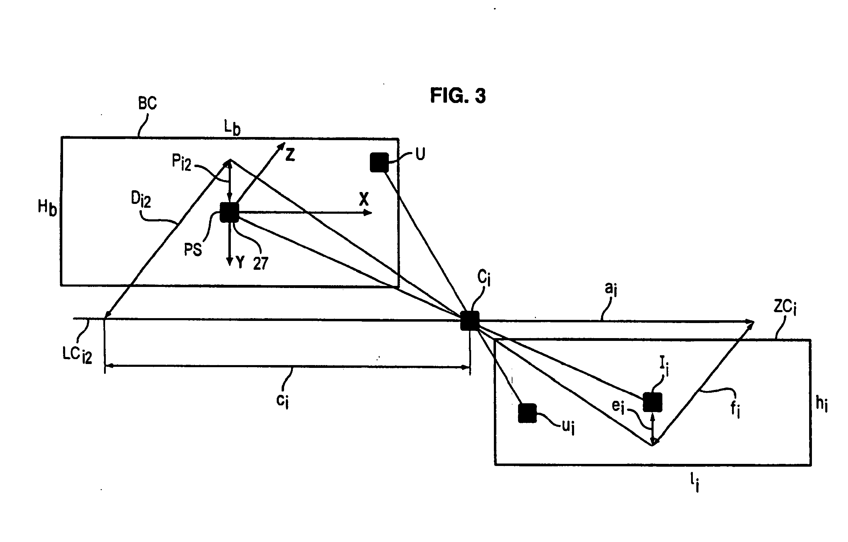

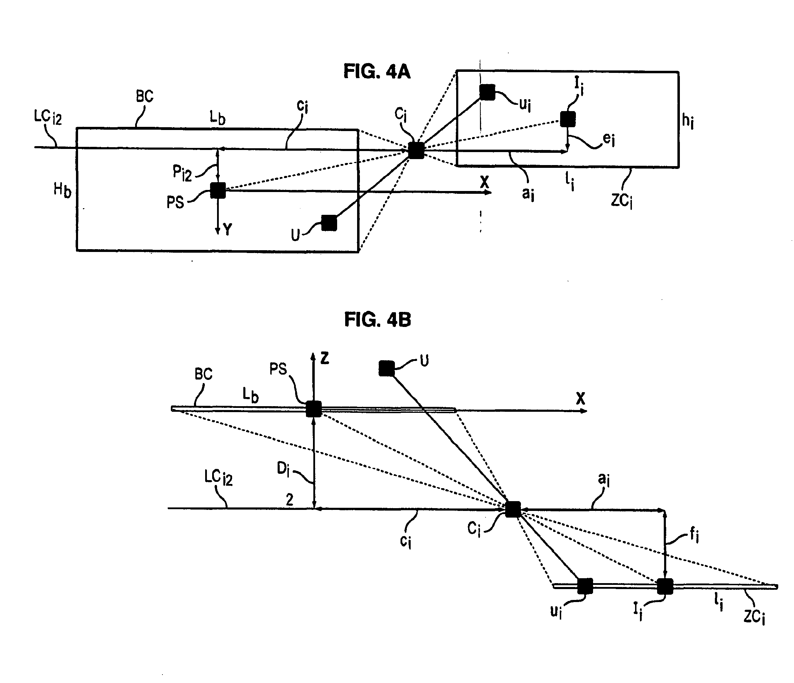

Les figures 2, 3, 4a et 4b correspondent à des représentations de la géométrie de captation des images permettant de définir la configuration de la zone de captation n° i : $ZC_i$, les figures 4a et 4b montrant des représentations, respectivement, de face et de dessus, de cette géométrie de captation.

La définition de la géométrie de captation s'appuie sur le repère global de captation 27 par exemple positionné au point PS de convergence désiré et orienté de telle sorte que les deux premiers vecteurs de base soient parallèles aux directions principales de la base commune centrée en PS et donc aux directions principales des zones de captation $ZC_i$. De façon illustrative et nullement limitative, le premier vecteur de base est ici choisi parallèle aux lignes des zones de captation et le second parallèle aux colonnes de ces zones.

Ce repère 27 (PS,X,Y,Z$\equiv$X$^{\wedge}$Y) permet de définir la position et l'orientation de toutes les pyramides de projection représentatives des zones de captation, en spécifiant notamment la direction d'observation Z et la ou les droites $LC_{i2}$ d'alignement des centres optiques.

Ces paramètres définissant le repère 27 de captation pourront donc comprendre :

- les coordonnées $PS_{/scn}$, dans la scène, du centre PS du repère 27,
- les coordonnées $X_{/scn}$, $Y_{/scn}$ et $Z_{/scn}$, dans la scène, des trois vecteurs de base du repère 27, donnant les directions caractéristiques de la base commune.

Plus précisément, les n$\times$m pyramides de captation représentatives d'un dispositif (ou système) virtuel de captation (ou prise de vues) sont spécifiées par:

- des centres optiques $C_i$, alignés sur une ou plusieurs droites $LC_{i2}$ parallèles aux lignes de la base commune et donc de direction X,
- des axes optiques $AO_i$ parallèles de direction Z et passant par les centres optiques $C_i$,

- des zones de captation $ZC_i$ rectangulaires :

  - orthogonales à Z, donc parallèles entre elles, à la base commune BC et aux droites $LC_{i2}$ d'alignement des centres optiques ; éventuellement coplanaires ;
  - placées à une distance $f_i$ du centre optique $C_i$, voire à une distance $f_{i2}$ commune à toutes les zones associées aux centres optiques alignés sur $LC_{i2}$, ou encore à une distance f commune à toutes les zones ;
  - de taille physique précisée, par exemple $l_i$ et $h_i$, ou de taille physique identique par lots $l_{i2}$, $h_{i2}$ ou globalement l, h selon les choix opérés ci-dessus pour les distances entre zone de captation et centre optique;
  - décentrées par rapport à leur axe optique respectif $AO_i$ en des points $I_i$ de sorte que les droites $I_iC_i$, qui définissent les axes de visée $AV_i$ passent toutes par le point de convergence fixé PS.

On notera que les zones de captation $ZC_i$ sont parallèles à la base commune BC. Elles ont donc un axe de capture perpendiculaire à la base commune BC mais les pyramides de projection ont des axes de visée $AV_i$ (ou axes principaux) convergent vers le point PS.

En référence à la figure 5, l'invention concerne donc un dispositif 1 de génération d'une configuration 25 de captation d'une pluralité d'images ( n×m) d'une scène virtuelle, ces n×m images étant destinées à une restitution, avec un effet relief prédéterminé (c'est-à-dire avec une maîtrise de la déformation), sur au moins un dispositif de restitution multiscopique, la captation étant réalisée par la projection de la scène sur une pluralité de n×m zones de captation $ZC_i$ associées chacune à un centre optique $C_i$.

Avantageusement, ce dispositif comporte des moyens 11 de traitement de données et des moyens 12 de mémorisation et/ou de communication interne (avec d'autres processus) ou externe (avec d'autres dipositifs) et/ou une interface 13 utilisateur. Grâce à l'interface utilisateur, l'opérateur sélectionne et/ou définit des paramètres relatifs à au moins un dispositif de restitution pour lequel le système adaptera la configuration 25 de captation (et auquel sont destinés les images captées grâce à cette configuration). Le système utilise des paramètres rentrés par l'opérateur via l'interface 13 ou pré-enregistrés, ces paramètres définissant la déformation choisie sur le rendu relief de la scène. Egalement, il est prévu que le système utilise des paramètres définissant au moins un des paramètres relatifs à la géométrie de captation détaillés ci-après.

Les moyens 11 de traitement exécutent un module 22 de configuration générant des données définissant ladite configuration 25 et représentatives des positionnements, par rapport à la scène, des n×m centres optiques $C_i$, et des dimensions et positionnements, par rapport à la scène, des n×m zones de captation $ZC_i$ qui leurs sont associées.

Ainsi, le module 22 génère ladite configuration 25 par la mise en relation d'au moins les données suivantes, provenant des moyens 12 de mémorisation et/ou de communication interne ou externe et/ou provenant de l'interface 13 utilisateur :

- des données représentatives du positionnement, de l'orientation et de l'éventuelle conformation dans la scène d'au moins un repère 27 global de captation,
- des données représentatives d'au moins un paramètre 23 de configuration, définissant une déformation souhaitée pour l'effet relief et/ou une géométrie de captation,
- des données représentatives de paramètres 21 de restitution, définissant ou permettant de déduire au moins les dimensions d'une zone utile choisie du dispositif de restitution et les positions d'observation privilégiées choisies pour le dispositif de restitution.

L'interface 13 utilisateur (ou « interface homme/machine », comme par exemple au moins un écran et des moyens de saisie et/ou d'interaction) permet, en coopération avec le module 22 de configuration, la gestion interactive (saisie, consultation, sélection, édition, sauvegarde) de ces paramètres 21, 23 et/ou 27. Alternativement, au moins un de ces paramètres pourra être préalablement enregistré à l'aide des moyens 12 d'enregistrement.

Selon une autre variante de réalisation du système de génération, un module de reconnaissance permet la reconnaissance automatique d'un dispositif de restitution connecté au système, puis la sélection dans une liste de dispositifs connus de tout ou partie de ses paramètres de restitution 21. Le module 22 de configuration utilise des relations déterminées pour effectuer la mise en relation au moins des données représentatives du repère 27, des données représentatives d'au moins un paramètre de configuration 23 et des données représentatives des paramètres de restitution 21.

Le module 22 de configuration utilise des données représentatives du positionnement, de l'orientation et de l'éventuelle conformation dans la scène d'au moins un repère 27 global de captation qui permet notamment de positionner dans la scène le point de convergence PS et d'orienter dans la scène, autour de ce point, la base commune BC. Ce repère 27 permet alors aussi de positionner, orienter, voire conformer, les zones de captation $ZC_i$ et les centres optiques $C_i$ vis à vis de la scène.

Ainsi, les données concernant le repère 27 permettent de déterminer :

- les coordonnées dans la scène PS$_{/scn}$ du point de convergence,
- les coordonnées dans la scène X$_{/scn}$, Y$_{/scm}$ Z$_{/scn}$ des trois directions caractéristiques de la base commune BC : directions principales pour X et Y, et direction normale pour Z.

Le module 22 de configuration utilise des données représentatives de paramètres 21 de restitution. Ces paramètres 21 de restitution concernent d'une part les dimensions de la zone utile du dispositif de restitution. Cette zone utile peut être exprimée en termes de largeur L et de hauteur H par exemple, mais également en terme de ratio (par exemple, de type 16/9 ou 4/3) et dimension de la diagonale (par exemple en pouces : 32") ou encore en dimension d'un point image (pitchs, par exemple en µm ou densité en dpi) et en résolution utilisée (nombre de pixels par ligne et colonne de la zone utile). Ces paramètres 21 de restitution concernent d'autre part les positions d'observation privilégiées O$_i$, O$_{gi}$ pour le dispositif de restitution choisi (par exemple n×m positions privilégiées). Ces positions peuvent être définies par le positionnement optimal du spectateur (par exemple à une distance optimale d'observation), un ou plusieurs plongements (ou zéniths) optimaux d'observation, comme détaillé ci-après. Un exemple d'expression de ces paramètres est donné en définition cartésienne par :

- la distance d$_i$ de chaque position d'observation par rapport au plan du dispositif de restitution,
- le décalage latéral (selon les lignes du dispositif) o$_i$ de chaque position d'observation par rapport au centre Ce du dispositif,
- le décalage vertical (selon les colonnes du dispositif) p$_i$ de chaque position d'observation par rapport au centre Ce du dispositif.

Cependant, il est évident que l'on peut également utiliser, pour chaque position, une définition sphérique par la distance au centre Ce et des angles d'azimut et de zénith, ou même utiliser des coordonnées cylindriques. Par ailleurs, dans les exemples détaillés ici, et comme illustré sur la figure 1, ces positions étant alignées par lots sur une ou plusieurs droites LO$_{i2}$ « d'alignement des positions d'observations », parallèles aux lignes du dispositif, un paramétrage réduit peut aussi être utilisé en ne conservant que les paramètres non redondants, tels que la distance d$_{i2}$, le décalage vertical p$_{i2}$ de chaque droite LO$_{i2}$ d'alignement impliquée et le décalage latéral o$_i$ de chaque position sur sa droite d'alignement. Ce décalage peut même être réduit aux décalages o$_{i1}$ communs « par colonnes » si la distribution matricielle place les positions d'observation de même indice i1 au même décalage latéral.

Les données représentatives de la configuration 25 définissent, quant à elles, les positionnements, par rapport à la scène, des n×m centres optiques C$_i$ et les dimensions et positionnements, par rapport à la scène, des nxm zones de captation ZC$_i$ qui leur sont associées. Ces données permettent donc de définir chaque zone ZC$_i$ de captation n° i dans la scène au moyen d'informations 25i qui comprennent ou permettent de déterminer la configuration 25 de captation par :

- les coordonnées C$_{i/scn}$ dans la scène du centre optique C$_i$ ;
- l'orientation de la zone de captation ZC$_i$ dans la scène. Par exemple les coordonnées, dans la scène, des deux vecteurs principaux X$_{i/scn}$, orienté selon les lignes de l'image à capter et Y$_{i/scn}$, orienté selon les colonnes de l'image à capter ;
- les dimensions (de la zone utile) des zones de captation ZC$_i$, par exemple exprimées en largeur lz$_i$ et en hauteur hz$_i$;
- le positionnement effectif de la zone de captation ZC$_i$ vis-à-vis du centre optique C$_i$ (ou « centre de projection ») ;

Ce positionnement effectif du centre optique C$_i$ peut être exprimé grâce au repère global 27 par C$_{i/scn}$= PS$_{/scn}$+ pX$_i$.X$_{/scn}$-pY$_i$.Y$_{/scn}$-pZ$_i$.Z$_{/scn}$ , en coordonnées cartésiennes, avec :

- pZ$_i$ : distance séparant ce centre optique Ci de la base commune BC selon -Z$_{i/scn}$ ;
- pX$_i$ : décalage (selon X$_{i/scn}$) de ce centre optique C$_i$ par rapport au point de convergence (PS), centre de la base commune BC ;
- pY$_i$ : décalage (selon -V$_{i/scn}$) de ce centre optique C$_i$ par rapport au point de convergence (PS), centre de la base commune BC.

Ce positionnement effectif grâce au repère global 27 peut également être exprimé en coordonnées angulaires : par exemple par l'azimut et le zénith de l'axe PS-C$_i$ (cf figure 2).
Ce positionnement effectif de la zone de captation ZC$_i$ peut être exprimé en coordonnées cartésiennes par :

- dZ$_i$ : distance séparant la zone de captation n° i de son centre optique Ci (orthogonalement au plan de la zone de captation, c'est-à-dire selon l'axe optique AO$_i$, soit selon Z$_{i/scn}$),
- dX$_i$ : décalage (selon X$_{i/scn}$) du centre I$_i$ de la zone de captation ZC$_i$ par rapport au centre optique C$_i$,

- $dY_i$ : décalage (selon $Y_{i/scn}$) du centre $I_i$ de la zone de captation $ZC_i$ par rapport au centre optique $C_i$.

Ce positionnement effectif peut également être exprimé en coordonnées angulaires : par exemple par l'azimut et le zénith de l'axe de visée $AV_i$.

De même les dimensions cartésiennes $lz_i$ et $hz_i$ de la zone de captation $ZC_i$ peuvent être remplacées, une fois la distance $dZi$ déterminée, par les ouvertures angulaires horizontale et verticale (voire les azimuts gauche et droit et les zéniths bas et haut).

Ainsi, l'invention permet de déterminer, à partir des paramètres 21 de restitution, du repère global 27 de captation et des paramètres 23 de configuration, les données représentatives de la configuration 25 en déterminant au moins une partie des informations 25i ci-dessus.

Les données représentatives d'au moins un paramètre 23 de configuration comportent des données représentatives d'au moins un ensemble de paramètres parmi les ensembles de paramètres suivants :

- ensemble 23a de paramètres internes de captation définissant la géométrie de captation directement par au moins les positions, vis à vis d'un repère propre au dispositif virtuel de captation, des centres optiques $C_i$ et les positions des zones de captation $ZC_i$ sur lesquelles la scène sera projetée pour former les $n{\times}m$ images,
- ensemble 23b de paramètres externes de captation définissant la géométrie de captation à partir du point de convergence PS par au moins : les dimensions de la base commune BC centrée sur le point PS de convergence ; le positionnement précis de la ou des droites $LC_{i2}$ d'alignement des centres, relativement à la base commune ; le positionnement précis des centres optiques $C_i$ sur ces droites $LC_{i2}$ d'alignement ; et enfin la position précise des plans de captation parallèles à la base commune qui définissent les zones de captation $ZC_i$ comme leur intersection avec les faisceaux de projection.
- ensemble 23c de paramètres de déformation définissant les déformations envisageables pour la restitution en relief de la scène.

La présente invention, grâce à ces divers ensembles 23a, 23b, 23c de paramètres, permet à l'utilisateur, dans divers modes de réalisation du module 22 de configuration du système, permettant les fonctionnalités et modalités décrites ici, de choisir des valeurs pour les paramètres 23a internes de captation et/ou des valeurs pour les paramètres 23b externes de captation et/ou des valeurs pour les paramètres 23c de déformation. On comprendra de l'analyse faite ci-après que certains des paramètres de ces ensembles permettent de déduire d'autres paramètres du même ensemble ou d'un autre ensemble. L'invention permet donc en fait diverses combinaisons des modes de réalisation décrits ci-après, à moins que ces modes de réalisation ne soient incompatibles ou que cela ne soit expressément mentionné.

Les paramètres de restitution 21, de captation (internes 23a ou externe 23b) et de déformation 23c ci-dessus sont liés par un jeu d'équations qui découle de la comparaison entre les coordonnées X,Y,Z des points U de la scène virtuelle 3D et celles $x_i,y_i,z_i$ de leurs homologues perçus par un observateur du dispositif de restitution.

Ainsi, plusieurs modalités sont possibles au sein du module 22 de configuration :

- calculer les paramètres 23b externes et/ou 23a internes de captation en fonction des paramètres 21 de restitution et des paramètres 23c de déformation désirés, ce qui permet au système d'assurer que la déformation désirée sera obtenue effectivement à la restitution en relief de la scène virtuelle. Les équations alors utilisées sont délivrées ci-après dans la modalité concernée « contrôle de déformation ».

- calculer les paramètres 23c de déformation induits par les choix techniques (paramètres de captation 23b externes et/ou 23a internes et de restitution 21), ce qui permet au système de quantifier précisément les déformations perceptibles et de les présenter textuellement ou schématiquement à l'opérateur pour le guider dans ses choix. Les équations alors utilisées sont délivrées ci-après dans les modalités concernées « réglage interne » et « réglage externe ».

Selon la première modalité, il est possible de rentrer comme paramètres de déformation 23c au moins l'un des paramètres suivants :

- un (ou des) facteur(s) $k_i$ de grossissement global et notamment en profondeur,
- un (ou des) paramètres $\varepsilon_i$ de contrôle de la déformation non linéaire potentielle (qui transforme un cube en tronc de pyramide),
- un (ou des) taux $\mu_i$ de grossissement relatif de la largeur par rapport à la profondeur ou facteur d'anamorphose horizontal/profondeur souhaité,
- un (ou des) taux $\rho_i$ de grossissement relatif de la hauteur par rapport à la largeur ou facteur d'anamorphose vertical/horizontal souhaité,

- un (ou des) taux $\gamma_i$ de cisaillement horizontal du relief perçu,
- un (ou des) taux $\delta_i$ de cisaillement vertical du relief perçu par un observateur de plongement conforme à celui attendu.

Grâce aux analyses des géométries de restitution et captation faites ci-dessus, il est possible de relier les coordonnées X,Y,Z dans le repère 27 des points U (en 3D) de la scène virtuelle ou réelle captée par les caméras virtuelles ou réelles précédemment définies avec les coordonnées $x_i,y_i,z_i$ dans le repère Ce,x,y,z de leurs homologues perçus par un observateur (d'écart binoculaire attendu $b_{i2}$) du dispositif de restitution, placé dans une position préférentielle (oeil droit en $O_i$) précédemment définie lorsque le dispositif exploite conformément à ses prescriptions des images générées par une utilisation de la configuration conformément à l'invention, telle que décrite ci-après.

Cette relation entre les coordonnées 3D des points de la scène et celles de leurs images restituées par le dispositif pour cette position est caractérisée par exemple par l'expression en coordonnées homogène :

$$
a \begin{bmatrix} x_i \\ y_i \\ z_i \\ 1 \end{bmatrix} = k_i \begin{bmatrix} \mu_i & & \gamma_i & 0 \\ & \rho_i\mu_i & \delta_i & 0 \\ & & 1 & 0 \\ 0 & 0 & k_i(\varepsilon_i -1)/d_i & \varepsilon_i \end{bmatrix} * \begin{bmatrix} X \\ Y \\ Z \\ 1 \end{bmatrix}
$$

qui fait apparaître, en sus de a, résidu de calcul sans autre importance, les paramètres de déformation 23c qui la caractérisent collectivement. Des matrices homogènes permettent ainsi de définir les transformations entre l'espace initial de la scène et l'espace de restitution pour chaque position d'observation privilégiée n°i.

En sus du facteur de grossissement global $k_i$ qui n'est pas à proprement parler de nature à déformer la scène, la transformation du relief comporte quatre possibilités indépendantes de déformation :

1. une non linéarité globale qui se traduit par une déformation du volume restitué en « tronc de pyramide » lorsque $\varepsilon_i \neq 1$,
2. un glissement ou « cisaillement horizontal » du volume restitué en fonction de la profondeur lorsque $\gamma_i \neq 0$,
3. un glissement ou « cisaillement vertical » du volume restitué en fonction de la profondeur lorsque $\delta_i \neq 0$ et/ou lorsque le plongement réel de l'observateur est différent du plongement optimal, 4. une anamorphose produisant des dilatations inégales des 3 axes lorsque $\mu_i \neq 1$ et/ou $\rho_i \neq 1$.

Les équations implique alors par rapport aux géométries de restitution et de captation décrites précédemment (avec ici, par soucis de généralité un paramétrage individuel de chaque zone de captation ($f_i$, $l_i$, $h_i$) alors que ce paramétrage peut être par lots ou global) les relations suivantes :

$$k_i = d_{i2}/D_{i2}$$

$$\mu_i = b_{i2}/(B_{i2}\, k_i)$$

$$\varepsilon_i = b_{i2}\, l_i\, f_i\, /(B_{i2}\, L\, D_{i2})$$

$$\rho_i = l_i\, H/(h_i\, L)$$

$$\gamma_i = (b_{i2}\, c_i - B_{i2}\, o_i)/(B_{i2}\, d_{i2})$$

$$\delta_i = (B_{i2}\, p_i - b_{i2}\, \rho_i\, P_i)/(B_{i2}\, d_{i2})$$

Pour obtenir une déformation contrôlée du relief restitué, il convient de configurer la prise de vues (géométrie de captation de la scène virtuelle ou réelle) de façon à obtenir le paramétrage désiré de chacune des quatre déformations potentielles. Cela est obtenu par le module 22 de configuration qui permet le réglage direct ou indirect selon les modalités retenues des paramètres de déformation $\varepsilon_i$ (et donc $k_i(\varepsilon_i - 1)/d_i$), $\gamma_i$, $\mu_i$, $\rho_i$ et enfin $\delta_i$, le glissement vertical choisi $\delta_i$ ne pouvant être assuré que pour des observateurs ayant le plongement défini dans les paramètres 21 de restitution pour cette position d'observation.

Dans le cas où une restitution d'images sans déformation est souhaitée (au grossissement $k_i$ près), il convient notamment, une fois les conditions de restitution choisies, de configurer la prise de vues (géométrie de capture) de façon à résorber ces quatre déformations potentielles. Cela est obtenu par le module 22 de configuration en s'assurant directement ou indirectement selon les modalités retenues que les paramètres de déformation vérifient $\varepsilon_i = 1$, $\gamma_i = 0$, $\mu_i = 1$, $\rho_i = 1$ et enfin $\delta_i = 0$. Cette dernière condition $\delta_i = 0$ est plus délicate car elle dépend de la taille de l'observateur qui agit inévitablement sur son plongement effectif vis-à-vis du dispositif. Elle ne peut alors être assurée que pour des observateurs ayant le plongement défini dans les paramètres 21 de restitution pour cette position d'observation. On notera que dans le cas où $k_i = 1$, on retrouve les conditions concernant un relief parfait (rendu relief sans déformation) mentionné précédemment et une scène restituée avec un relief identique à celui de la scène captée.

Les informations 25i peuvent être calculées comme suit (avec les jeux de paramètres choisis comme exemple) :

$f_i$ imposé ou choisi, individuellement $\forall i \in \{1...n\} \times \{1...m\}$, par lots $\forall i2 \in \{1...n\}$ ou globalement

$$lz_i = L\, f_i\, \varepsilon_i / (\mu_i\, d_{i2}) \quad hz_i = H\, f_i\, \varepsilon_i / (\mu_i\, \rho\, d_{i2})$$

$$dX_i = f_i\, (o_i + \gamma_i\, d_{i2}) / (\mu_i\, d_{i2}) \qquad dY_i = f_i\, (p_i - \delta_i\, d_{i2}) / (\rho\, \mu_i\, d_{i2}) \quad dZ_i = f_i$$

$$X_{i/scn} = X_{/scn} , \qquad Y_{i/scn} = Y_{/scn}$$

$$pX_i = (o_i + \gamma_i\, d_{i2})/(k_i\, \mu_i) \qquad pY_i = (p_i - \delta_i\, d_{i2})/(k_i\, \rho\, \mu_i) \qquad pZ_i = d_{i2}/k_i$$

$$C_{i/scn} = PS_{/scn} + (o_i + \gamma_i\, d_{i2})/(k_i\, \mu_i).X_{/scn} - (p_i - \delta_i\, d_{i2})/(k_i\, \rho\, \mu_i).Y_{/scn} - d_{i2}/k_i.Z_{/scn}$$

Un module optionnel d'aide à l'opérateur (coopérant avec, ou implémenté dans le module de configuration (22)) est configuré de façon à calculer, à partir des paramètres (21) de restitution et (23c) de déformation qu'ils manipulent, les réglages internes ou externes du dispositif de captation (valeurs numériques des paramètres (23a) et/ou (23b)) induits par les déformations choisies et les présenter à l'opérateur. Les équations impliquées, sur les jeux de paramètres choisis pour exemple, peuvent s'exprimer, pour les paramètres externes (23b) selon :

$$c_i = (o_i + \gamma_i\, d_{i2}) / (k_i\, \mu_i)$$

$$P_{i2} = (p_i - \delta_i\, d_{i2}) / (k_i\, \rho\, \mu_i)$$

$$D_{i2} = d_{i2}/k_i.$$

$$Lb = L\, \varepsilon_i / (k_i\, \mu_i)$$

$$Hb = H\, \varepsilon_i / (k_i\, \rho\, \mu_i)$$

$f_i$ imposé ou choisi, individuellement $\forall i \in \{1...n\} \times \{1...m\}$, par lots $\forall i2 \in \{1...n\}$ ou globalement :

et pour les paramètres internes (23a) selon :

$$c_i= (o_i + \gamma_i\, d_{i2})/ (k_i\, \mu_i)$$

$$P_{i2}= (p_i - \delta_i\, d_{i2})/ (k_i\, \rho\, \mu_i)$$

$$D_{i2}=d_{i2}/k_i$$

$f_i$ imposé ou choisi, individuellement $\forall i \in \{1...n\} \times \{1...m\}$, par lots $\forall i2 \in \{1...n\}$ ou globalement,

$$l_i=L\, f_i\, \varepsilon_i / (\mu_i\, d_{i2})$$

$$h_i= H\, f_i\, \varepsilon_i / (\mu_i\, \rho\, d_{i2})$$

$$a_i= f_i\, (o_i + \gamma_i\, d_{i2})/ (\mu_i\, d_{i2})$$

$$e_i= f_i\, (p_i - \delta_i\, d_{i2})/ (\rho\, \mu_i\, d_{i2})$$

Ces dernières variantes (présentation des réglages internes et/ou externes associées à une déformation choisie) donnent à l'opérateur un moyen d'autoformation au contrôle direct de l'effet relief qui pourrait lui être utile dans les autres modalités de réalisation de l'invention.

Dans certaines variantes de réalisation, le module optionnel d'aide à l'opérateur (coopérant avec, ou implémenté dans le module 22 de configuration et/ou le module de pilotage de l'interface 13 homme/machine) est agencé pour montrer par représentation graphique ou synthèse d'images dans une vue statique ou interactive, l'effet sur un objet de forme prédéterminée (parallélépipède, sphère, ...) des déformations impliquées par les valeurs actuelles des paramètres choisis par l'utilisateur dans l'interface.

Ces dernières variantes (présentation de la déformation impliquée sous une forme textuelle ou graphique) donnent à l'opérateur un véritable contrôle de la déformation que ses choix impliquent et justifient donc la dénomination de modalité à déformation de relief contrôlée.

**Utilisation de la configuration de captation**

Ainsi, il est possible de définir les paramètres 25i représentatifs d'une pluralité de caméras virtuelles ou réelles constituant un système de captation positionné dans la scène grâce au repère global de captation 27 et/ou de les stocker et/ou les transférer dans le(s) moyen(s) de mémorisation 12 et/ou de communication interne ou externe.

Il est également possible de faire évoluer dans le temps (par exemple sur la base d'une référence temporelle 29 ou sur l'action de l'utilisateur) les variables d'entrée 21, 27 et/ou 23.

Ainsi, l'utilisateur peut définir les variations de la captation, par exemple à l'aide d'une navigation contrôlée, par exemple, par des moyens de saisie tel qu'un pointeur (une souris, un dispositif de pointage 3D par exemple). La variation de tout ou partie des données représentatives du repère 27 de captation permet ainsi des effets classiques de travelling autour de la scène ou de navigation interactive.

La variation de tout ou partie des données représentatives des paramètres 23 de configuration permet, selon l'ensemble de données choisi (paramètres externes, internes ou de déformation), de contrôler directement ou indirectement, de façon programmée ou interactive, l'évolution de la déformation de relief restitué et des paramètres de captation (point de convergence, position des centres optiques, pyramides de projection, etc.). La variation de tout ou partie des données représentatives de la restitution 21 permet de régler le dispositif de captation en fonction de positions évolutives des observateurs. Cela permet notamment le suivi interactif d'un ou plusieurs observateurs à qui l'on souhaite proposer une expérience de visualisation en relief « intrinsèque » autour de laquelle ils peuvent, dans certaines limites, se déplacer pour l'appréhender sous divers angles de façon très naturelle.

La configuration 25 de captation peut être par la suite utilisée de différente manière.

Selon un premier mode de réalisation, les paramètres de configuration peuvent être utilisés pour générer des images ou séquences d'images de synthèse d'une scène virtuelle statique ou dynamique. Pour cela, le système 1 peut comporter ou être associé à un module de synthèse d'image utilisant la configuration 25 pour générer ces images ou séquences d'images, grâce à des données 24 représentatives soit de positionnements et de caractéristiques, statiques ou évolutifs, de constituants d'une scène virtuelle tridimensionnelle, soit d'une suite d'instructions informatiques ou ordres graphiques permettant de définir cette même scène. Ensuite, le module de synthèse d'image génèrera des images ou séquences d'images, qui, une fois mixées (par exemple dans un flux vidéo) de façon appropriées, pourront être restituées par un dispositif de restitution multiscopique restituant le relief de la scène.

Cette génération d'images de synthèse peut être réalisée par un module de synthèse d'images MSI exécuté sur des moyens de traitement. Ces moyens de traitement pourront être ceux du système de génération de la configuration ou au moins un autre système informatique. Ce module de synthèse d'images MSI génère des données 28 représentatives des $n \times m$ images ou séquences d'images de synthèse à partir :

- des données 25 représentatives des positionnements des $n \times m$ centres optiques $C_i$ et des dimensions et positionnements des $n \times m$ zones de captation $ZC_i$ par rapport à la scène et définissant ladite configuration 25 ;
- des données 24 représentatives soit de positionnements et de caractéristiques, statiques ou évolutifs, de constituants d'une scène virtuelle tridimensionnelle, soit d'une suite d'instructions informatiques ou ordres graphiques permettant de définir cette même scène.

Les données 24 représentatives de la scène pourront comporter des paramètres permettant la représentation explicite des constituants d'une scène pour produire les $n \times m$ images. Selon les modalités acceptables par le MSI, les données 24 représentatives de la scène pourront correspondre notamment au positionnement, à la forme et à la matière d'objets, ainsi qu'au positionnement et aux caractéristiques optiques d'illuminants, etc... comme connu dans le domaine. Selon les modalités acceptables par le module MSI, les données 24 pourront correspondre notamment à des instructions de définitions géométriques, photométriques et optiques dans un langage binaire ou « source » acceptable par le MSI.

Ces données 24 représentatives de la scène, pourront, comme mentionné précédemment, être stockées dans des moyens de mémorisation du système de synthèse d'images ou des moyens de mémorisation accessibles par le système de synthèse d'images, c'est-à-dire via des moyens de communication avec d'autres systèmes, ou même n'être présentes dans le système que par le biais de moyens de communication. Par exemple, il est possible de réaliser la synthèse d'image de manière collaborative dans laquelle plusieurs systèmes (par exemple de CAO-Conception Assistée par Ordinateur) coopèrent en échangeant les données 24 nécessaires via des canaux de communication (réseau, comme par exemple de type intranet ou internet) avec éventuellement une centralisation des données. De plus, il est possible que les données 24 représentatives de la scène soient obtenues directement à partir de canaux de communication internes, tels que les bus ou autres processus. Par exemple, le module de synthèse d'image, dans une modalité désignée sous le nom de « wrapper », peut être (ou comporter, ou être associé à, un second module) agencé pour intercepter directement des appels faits, par exemple, à une carte ou une bibliothèque graphique, pour générer les images de synthèse à partir des données interceptées. Dans ce cas, la description de la scène est en fait implicite puisqu'elle correspond en fait à une succession d'ordres ou instructions graphiques obtenue, par exemple, « à la volée ». Le module MSI est connu de l'état de la technique et ne sera plus détaillé. Il est notamment à noter que le MSI peut être avantageusement associé à un logiciel de CAO (SolidWorks, Catia, AutoCAD, Pro/Engineer, ...) ou d'effets spéciaux (Maya, 3DSmax, Massive de Weta digital, ...).

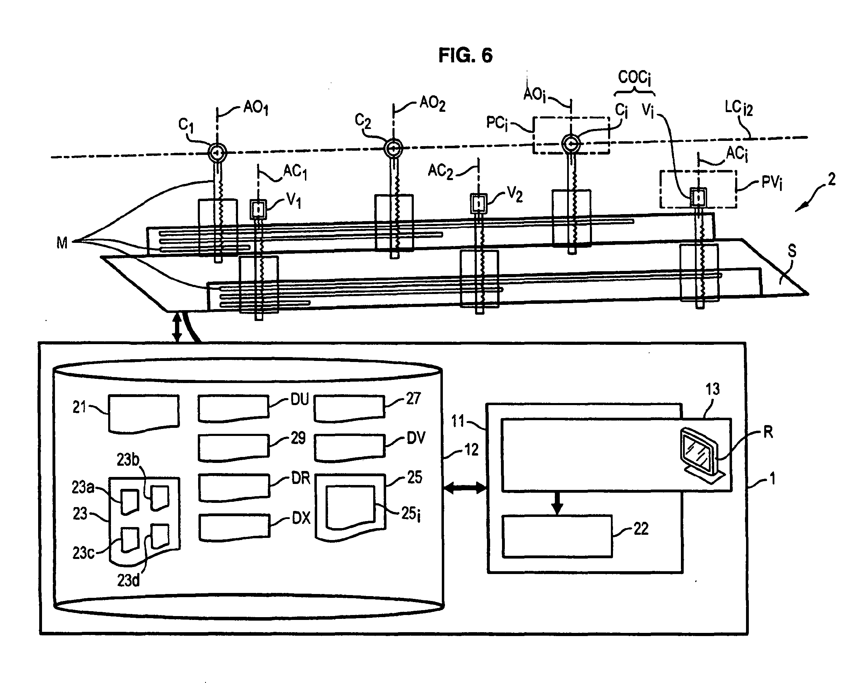

En référence à la figure 6 et selon un second mode de réalisation de la présente invention, un dispositif 2 de captation comporte une pluralité de capteurs $V_i$ ($n \times m$) qui sont associés chacun à une optique $OP_i$ comportant un centre optique $C_i$, formant ainsi une pluralité $n \times m$ de couples optique-capteur $COC_i$ (trois dans l'exemple de la figure 6). Par le terme « optique », on entend ici tout dispositif de focalisation optique (focalisation automatique, de type auto-focus, ou manuel), comprenant par exemple au moins un objectif ou au moins une lentille. Par le terme « capteur », on entend ici tout dispositif de captation d'image ou de séquences d'images (vidéo), comme par un exemple les capteurs Cmos (« Complementary metal oxide semi-conductor », selon la terminologie anglo-saxonne) ou les capteurs CCD (« Charge-Coupled Device » selon la terminologie anglo-saxonne, ou « détecteurs à couplage de charge »). Ainsi, le but de l'invention dans ce mode de réalisation est de configurer les positionnements de ces couples optique-capteur de façon à réaliser une pluralité de prises de vues (captation d'images) cohérentes, permettant une restitution en relief avec contrôle de la déformation. Les zones de captation $ZC_i$ correspondent à la projection de la scène sur au moins une partie des capteurs $V_i$. Selon un mode particulier de la présente invention, des moyens M de positionnement peuvent donc être pré-configurés en usine selon une configuration 25 de captation définissant un rendu relief déterminé pour un dispositif de restitution déterminé avec une déformation souhaitée. Ces moyens M de positionnement pourront comporter par exemple des actionneurs micrométriques, actionnables manuellement ou commandé électroniquement. Alternativement, les moyens M de positionnement peuvent être de tout type connu de l'état de la technique permettant de répartir les capteurs et les optiques de façon coordonnée, en fonction de la captation à réaliser. Ces moyens de positionnement pourront par exemple comporter des actionneurs micrométriques par exemple sous forme de trois vérins à vis dont les corps sont solidaires de la poutre et dont les tiges sont solidaires des chariots déplaçant les capteurs horizontalement.

Selon le dispositif de restitution choisi, le dispositif 2 de captation à une ou plusieurs rangées pourra être utilisé et il est prévu diverses combinaisons possibles en ce qui concerne le nombre de rangées et le nombre de couples optique-capteur par rangées.

Par exemple, le dispositif de captation pourra comporter une pluralité de rangées de couples optique-capteur. En fonction du dispositif de restitution choisi, le dispositif de captation permet ainsi de définir le nombre m de rangées et, pour chaque rangée, le nombre n de couples optique-capteur (en fait, pour chaque rangée, le nombre n de centres optiques et de zones de captation) qui seront utilisées pour la captation. De même, on peut parler de colonnes au lieu de rangées si l'on souhaite décrire le dispositif selon un arrangement vertical plutôt qu'horizontal.

Le dispositif 2 de captation selon l'invention effectue une captation de la scène (selon une pluralité de prises de vues) en fonction de la configuration 25 de captation déterminée comme expliquée précédemment.

Dans certains modes de réalisation, les moyens M de positionnement sont manuels. Le réglage des positionnements selon ladite configuration 25 de captation pourra donc être réalisé manuellement. La configuration pourra alors être présentée à l'opérateur (par exemple avec un manuel d'utilisateur ou au un dispositif d'affichage présentant les configurations utilisables) simplement avec des valeurs de positionnement qu'il devra régler sur le dispositif, pour régler des moyens M de positionnement des optiques et des capteurs. Dans des variantes de ces modes de réalisation, les moyens de positionnement manuels pourront être motorisés pour faciliter le réglage « manuel » par l'opérateur (sur la base des informations relatives à la configuration qui lui sont présentées).

Dans certains modes de réalisation, les moyens M de positionnement sont automatisés. Dans ce cas, les moyens M de positionnement sont motorisés et asservis par exemple au système 1. Ces moyens de traitement pourront être inclus dans le dispositif selon l'invention ou lui être associés via une connexion adéquate. L'essentiel est ici que ces moyens 11 de traitement puissent contrôler le dispositif 2 de captation (en fonction de la configuration 25 déterminée par le module de configuration). Ainsi, dans certains modes de réalisation, le dispositif comporte (ou est associé à) des moyens 11 de traitement de données exécutant un module 22 de configuration déterminant les paramètres $25i$ de définition de la configuration 25 de captation par les positions des zones de captations $ZC_i$ et des centres optiques $C_i$ à utiliser en fonction des paramètres 23 de configuration et des paramètres 21 de restitution, à partir de choix réalisés par un opérateur, via une interface 13 homme/machine du dispositif.

Dans certains modes de réalisation où les moyens M de positionnement sont automatisés, le module 22 de configuration pourra, par exemple, comporter un module électronique ou informatique, utilisant une pluralité de configurations 25 préalablement établies (décrites en détail ci-après) provenant de moyens 12 de mémorisation accessibles par le module 22 de configuration.

La captation est réalisée à l'aide d'une pluralité des $n \times m$ couples $COC_i$ optique-capteur formés par $n \times m$ optiques $OP_i$ ayant chacune un axe optique $AO_i$ et un centre optique $C_i$. Ces optiques $OP_i$ sont montées sur au moins un support S et leurs axes optiques $AO_i$ sont parallèles entre eux. Ces optiques $OP_i$ sont associées chacune à un capteur $V_i$ optoélectronique, monté sur le support S et dans lequel est définie une zone de captation $ZC_i$ dans laquelle la projection de la scène est prévue. Le support S peut par exemple comporter une poutre pour les capteurs (V1, V2, V3) et une poutre pour les optiques ($OP_i$=1 à 3) comme représenté sur la figure 6, l'essentiel étant de positionner les centres optiques $C_i$ les uns par rapport aux autres et les capteurs par rapport à leur centres optiques.

Le support S comprend des moyens M de positionnement des optiques $OP_i$ dans au moins un plan $PC_i$ per-pendiculaire aux axes optiques $AO_i$ et/ou des moyens M de positionnement des capteurs $V_i$ dans au moins un plan $PV_i$ parallèle au plan $PC_i$ des centres optiques $C_i$. Selon divers modes de réalisation, le positionnement des capteurs peut être couplé au positionnement des optiques et le dispositif 2 de captation pourra donc, dans certains cas, comporter seulement des moyens de positionnement des optiques ou des capteurs, l'optique $OP_i$ et le capteur $V_i$ de chaque couple $COC_i$ se déplaçant de façon coordonnée.

Ces moyens de positionnement permettent de déplacer les optiques et les capteurs dans des plans parallèles entre eux. Selon divers modes de réalisation, les moyens M de positionnement pourront être agencés soit pour un positionnement horizontal, soit pour un positionnement vertical, soit pour les deux. Les moyens M de positionnement des capteurs $V_i$ et/ou des optiques $OP_i$ de chaque couple $COC_i$ optique-capteur sont agencés pour que les positionne-ments des centres $C_i$ optiques et des zones de captations $ZC_i$ soient dans des proportions définies par des paramètres $25i$ de définition d'une configuration 25 de captation, comme mentionné précédemment.

La captation par le dispositif 2 de captation prévoit donc une projection de la scène sur les $n \times m$ zones de captation $ZC_i$ des $n \times m$ capteurs $V_i$, au travers de $n \times m$ faisceaux optiques pyramidaux de captation appuyés sur une base rectangulaire BC commune aux $n \times m$ faisceaux optiques et disposée dans la scène à capter. Les $n \times m$ faisceaux passent chacun par l'un des $n \times m$ centres $C_i$ des optiques $OP_i$ alignés, par lots, sur une ou plusieurs droite(s), dites droites $LC_{i2}$ d'alignement des centres, parallèle(s) à l'une des directions principales de cette base commune BC. Les zones de captation $ZC_i$ correspondent à l'intersection de ces faisceaux optiques avec au moins un plan parallèle à cette base commune BC. Les axes de visée $AV_i$ ou axes principaux des nxm faisceaux optiques, passant par leur centre ($C_i$) de leur optique $O_i$, convergent tous vers le centre PS de la base commune BC. Cette dernière condition de convergence des axes de visée $AV_i$ est nécessaire à la cohérence des images captées par les divers couples $COQ_i$ optique-capteur pour garantir une perception en relief.

Selon une réalisation possible de la présente invention les réglages des moyens M de positionnement sont réalisés de façon dynamique par le module 22 de configuration au cours d'une captation, à partir de la configuration 25 de captation utilisant au moins une référence 29 temporelle pour le changement des paramètres 25i de définition des positionnements des centres optiques $C_i$ et des zones de captation $ZC_i$.

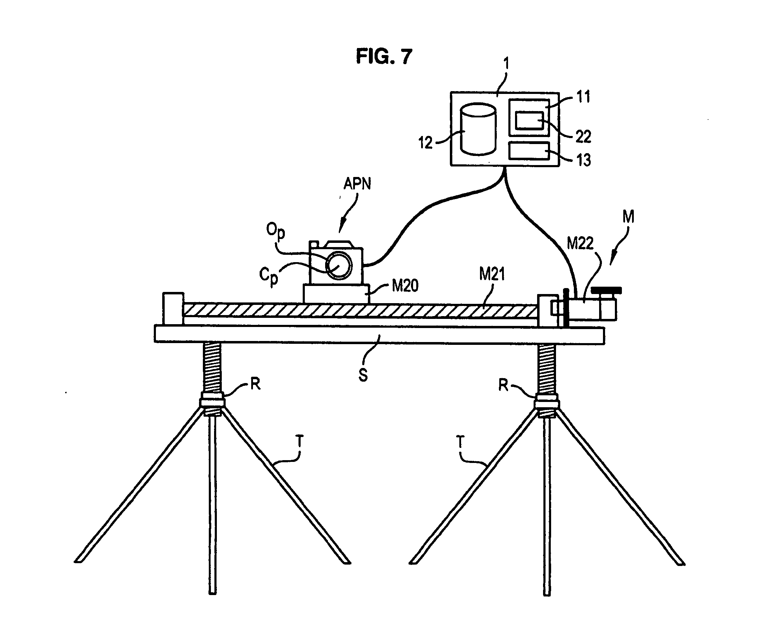

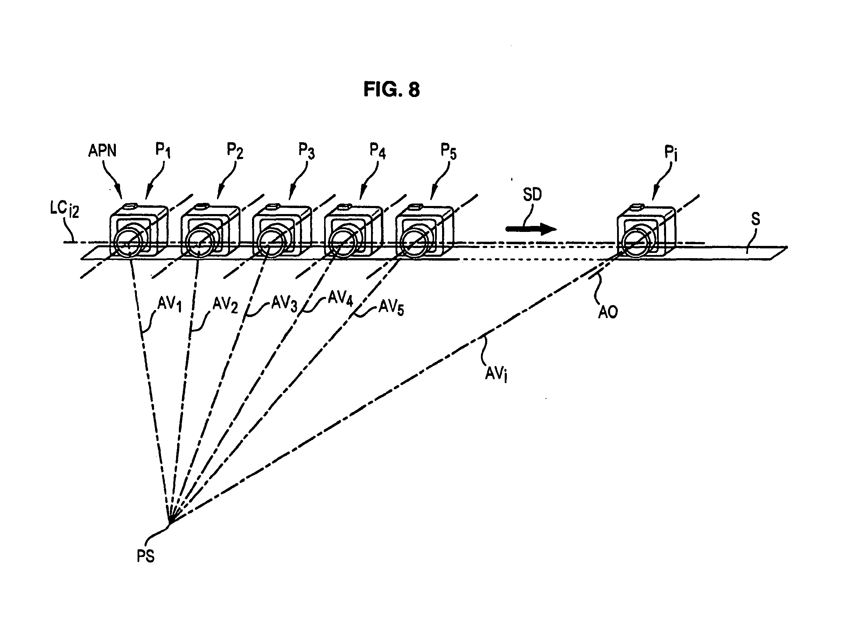

En référence aux figures 7 et 8, et selon un autre mode de réalisation du dispositif de capture, il est prévu la capture séquentielle de plusieurs prises de vue par le déplacement d'un ensemble optique-capteur au sein d'une partie d'un dispositif 3 de captation. Le support S du dispositif 3 de captation peut par exemple comporter au moins une poutre par exemple montée sur des trépieds T réglables en hauteur grâce à des moyens R de réglage de la hauteur et/ou l'horizontalité du support S. L'ensemble optique-capteur (un appareil photo numérique APN par exemple) est monté sur un chariot M20 dont le déplacement horizontal sur un rail M21 est réalisé grâce à un moteur M22 contrôlé par le module 22 de configuration. Pour le déplacement vertical, l'ensemble optique-capteur pourra par exemple être monté sur une platine dont le déplacement est réalisé par un actionneur micrométrique, par exemple à crémaillère, comportant un motoréducteur entraînant un pignon qui engrène avec une crémaillère longitudinale équipant un bras sur lequel est montée la platine. Dans un autre exemple du déplacement vertical, l'ensemble optique-capteur pourra par exemple être monté sur une platine (non représentée) dont le déplacement sur au moins un rail vertical (non représenté), monté sur le chariot M20 est réalisé grâce à un moteur (non représenté), par exemple contrôlé par le module 22 de configuration. Les prises de vues avec le dispositif selon l'invention devant de préférence être obtenues avec une grande précision du positionnement de l'ensemble optique-capteur, les moyens M de positionnement doivent être agencés pour permettre un déplacement précis (et rapide de préférence), en minimisant les défauts de positionnement de l'ensemble optique-capteur. Par exemple, dans certains modes de réalisation, le support S sera monté sur des vérins ou autres dispositifs de positionnement vertical précis, au lieu de simples trépieds T, pour déplacer verticalement, avec précision, tout le support S portant le rail M21 qui permet une translation précise. De même, dans d'autres modes de réalisation, le rail M21 pour la translation du chariot pourra être monté sur le support S par l'intermédiaire de vérins ou d'autres dispositifs de positionnement vertical précis. On notera que, dans l'exemple de la figure 7, les moyens R de réglage et/ou d'horizontalité du support permettent de régler la hauteur du support et pourrait donc servir au positionnement vertical. Ces moyens R de réglage de la hauteur pourront être manuels ou motorisés. L'invention prévoit divers agencement des moyens M de positionnement, l'essentiel étant que le déplacement (dans chacune des directions horizontale ou verticale) soit parfaitement longitudinal. Ainsi, il est préférable d'utiliser des moyens micrométriques, avec éventuellement un moteur pour actionner ces moyens. Il est prévu que le module 22 de configuration du système 1 pilote le(s) moteur(s) pour le déplacement de l'ensemble optique-capteur et en déclencher les prises de vues lorsqu'il atteint les positions $P_i$ déterminées.

Les moyens M de positionnement peuvent être de type connus de l'état de la technique permettant que les positions successives soient obtenues rapidement, et précisément, en respectant les paramètres 25i définissant la configuration 25 de captation.

On notera également que ce mode de réalisation peut être utilisé pour la captation de scènes statiques mais également de scènes animées séquentiellement. Par exemple, il est possible de faire une captation d'un objet pour obtenir un premier jeu d'images avec un premier passage (captation des nxm positions successives), puis de bouger l'objet (par exemple en rotation autour d'un axe vertical) avant de faire un deuxième passage pour obtenir un deuxième jeu d'images. Les images du premier jeu pourront alors être mixées spatialement pour obtenir une image mixée de l'objet dans sa première position. De même, le deuxième jeu permet d'obtenir une deuxième image de l'objet, mais dans sa deuxième position. Ensuite, un mixage temporel permettra d'obtenir une séquence des deux images mixées, pour obtenir une image animée séquentiellement. Cette opération peut être répétée autant de fois que nécessaire pour obtenir une séquence de x images mixées.

De retour à la figure 5, quelque soit le mode de réalisation de la captation, un mixage (qui peut être réalisé à distance) adapté au dispositif de restitution multiscopique choisi, est réalisé avant envoi des images grâce à un module MX de mixage utilisant des données DR représentatives des caractéristiques techniques du dispositif de restitution (modalités spatiales et temporelles du mixage, par exemple, masques de mélanges des $n \times m$ images sur la zone utile, fréquence et phase du mixage temporel ...) pour générer des données DX représentatives des $n \times m$ images ou séquences d'images mixées de manière appropriée pour leur restitution sur le dispositif de restitution.

L'homme du métier pourra effectuer d'autres modifications de la présente invention notamment dans le choix des valeurs numériques ou dans le type de dispositif particulier à mettre en oeuvre sans sortir du cadre de la présente invention.

Notamment, on notera ici que la présente description mentionne des moyens 12 de mémorisation et de communication interne ou externe qui sont représentés dans les figures comme appartenant au système 1 de génération mais il doit être évident que l'invention permet de répartir les divers types de données décrites ici dans plusieurs moyens de mémorisation et de communication différents et que plusieurs systèmes informatiques pourront coopérer pour permettre les diverses fonctionnalités décrites ici. Par exemple, les données représentatives des configurations 25 utilisées peuvent en fait provenir de mémoires externes et de mémoires volatiles (via des moyens de communication interne et/ou externe).

**Revendications**

1. Système (1) de génération d'une configuration (25) de captation d'une pluralité d'une pluralité d'images d'une scène, ces images étant destinées à une restitution sur au moins un dispositif de restitution multiscopique, la captation étant réalisée par la projection de la scène sur une pluralité de zones de captation (ZCi) parallèles associées chacune à un centre optique (CI), **caractérisé en ce qu'**il comprend un module (22) conçu pour générer une configuration (25) de captation comprenant :

 - des données représentatives du positionnement des centres optiques (Ci) exprimé dans au moins un repère (27) global de captation,
 - des données représentatives des dimensions, du positionnement dans l'au moins un repère global de captation, et de l'orientation des zones de captations (ZCi) associées aux centres optiques (Ci),

 à partir des données suivantes :

 - des données représentatives du positionnement, de l'orientation et de l'éventuelle conformation dans la scène de l'au moins un repère (27) global de captation,
 - des données représentatives des paramètres (23) de configuration, définissant une déformation paramétrable, et définissant des transformations entre l'espace initial de la scène et l'espace de restitution par :

  o au moins un facteur k, de grossissement global et notamment en profondeur,
  o au moins un paramètre $\varepsilon$, de contrôle de la déformation non linéaire potentielle,
  o au moins un taux $\mu$, de grossissement relatif de la largeur par rapport à la profondeur ou facteur d'anamorphose horizontal/profondeur souhaité,
  o au moins un taux $\rho$, de grossissement relatif de la hauteur par rapport à la largeur ou facteur d'anamorphose vertical/horizontal souhaité,
  o au moins un taux $\gamma$, de cisaillement horizontal du relief perçu,
  o au moins un taux $\delta$, de cisaillement vertical du relief perçu par un observateur de plongement conforme à celui attendu,

 lesdites transformations sont **caractérisées par** l'expression en coordonnées homogène

$$a \begin{bmatrix} x_i \\ y_i \\ z_i \\ 1 \end{bmatrix} = k_i \begin{bmatrix} \mu_i & & \gamma_i & 0 \\ & \rho_i\mu_i & \delta_i & 0 \\ & & 1 & 0 \\ 0 & 0 & k_i(\varepsilon_i-1)/d_i & \varepsilon_i \end{bmatrix} * \begin{bmatrix} X \\ Y \\ Z \\ 1 \end{bmatrix}$$

 dans laquelle X, Y, Z représentent les coordonnées des points de la scène et $x_i$, $y_i$, $z_i$ représentent celles de leurs homologues perçus par un observateur du dispositif de restitution,
 - des données représentatives de paramètres (21) de restitution en relation avec le dispositif de restitution multiscopique, comprenant :

  ◦ les dimensions d'une zone utile du dispositif de restitution,
  ◦ des positions d'observations privilégiées pour le dispositif de restitution.

2. Système selon la revendication 1, **caractérisé en ce que** les données représentatives d'au moins un paramètre

(23) de configuration comportent des données représentatives d'au moins un ensemble de paramètres parmi les ensembles de paramètres suivants :

- un ensemble de paramètres (23a), dits internes, de captation définissant directement la géométrie de captation par au moins les positions, vis-à-vis d'un repère propre au dispositif virtuel de captation, des centres optiques (Ci) alignés sur la (ou les) droite(s) (LCi2) d'alignement des centres et les positions des zones de captation (ZC), parallèles entre elles et orientées de façon à ce que leurs lignes soient parallèles à ces droites (LCi2) d'alignement des centres,
- un ensemble de paramètres (23b), dits externes, de captation définissant ou permettant d'identifier la géométrie de captation à partir du point de convergence (PS), par au moins les dimensions de la base commune (BC) centrée sur le point de convergence (PS), le positionnement de la ou des droites (LCi2) d'alignement des centres, le positionnement des centres optiques (Ci) sur ces droites (LCi2) d'alignement des centres et la position des plans parallèles à la base commune (BC) contenant Les zones de captation (ZCi).

3. Système selon l'une des revendications 1 à 2, **caractérisé en ce que** les données représentatives d'au moins un paramètre (23) de configuration comportent des données (23d) représentatives d'un paramètre définissant un relief restitué sans aucune déformation par rapport au relief de la scène captée.

4. Système selon une des revendications 1 à 3, **caractérisé en ce que** les données représentatives d'au moins un paramètre (23) de configuration comportent des données représentatives des paramètres (23b) externes de géométrie de captation suivants :

- au moins un paramètre définissant, relativement à la base commune (BC), le positionnement de la ou des droite(s) (LCi2) d'alignement des centres,
- au moins un paramètre définissant les positionnements des centres optiques (CI) sur ces droites (LCi2) d'alignement des centres,
- au moins un paramètre définissant directement ou indirectement les dimensions de la base commune (BC),
- au moins un paramètre définissant la position précise de chaque plan parallèle à la base commune (BC) portant au moins une zone de captation (Zd).

5. Système selon une des revendications 1 à 4, **caractérisé en ce que** les données représentatives d'au moins un paramètre (23) de configuration comportent des données représentatives des paramètres internes (23a) de géométrie de captation suivants :

- au moins un paramètre définissant les positionnements des centres optiques (Ci) vis-à-vis d'un repère propre à la captation,
- au moins un paramètre définissant l'orientation de l'axe de visée (AV1) de chaque pyramide de projection (ou axe principal),
- au moins un paramètre définissant la géométrie de la pyramide de projection effective de chaque zone de captation (ZCi).

6. Système selon une des revendications 1 à 5, **caractérisé en ce que** tout ou partie des ensembles de données à partir desquels le module (22) de configuration détermine ladite configuration sont variables au cours du temps, grâce à des données provenant des moyens de mémorisation et/ou de communication interne ou externe et/ou de l'interface utilisateur et définissant au moins une référence (29) temporelle pour le changement des données représentatives du ou des paramètre(s) (23) de configuration et/ou des données (27) représentatives du repère global de captation et/ou des données (21) représentatives dispositif de restitution, notamment des positions d'observation choisies.

7. Ensemble de captation comprenant un système de génération d'une configuration (25) de captation selon l'une des revendications précédentes, **caractérisé en ce qu'**il comprend en outre module de synthèse d'images (MSI) utilisant la configuration (25) de captation pour les positionnements des nxm centres optiques (d) et des dimensions et positionnements des nxm zones de captation (ZCi) par rapport à une scène virtuelle pour la génération de nxm images ou séquences d'images de la scène virtuelle, ladite scène étant statique ou dynamique.

8. Ensemble de captation selon la revendication 7, dans lequel le module de synthèse d'images (MSI) est adapté pour utiliser également des données (24) représentatives de la scène, soit de positionnements et de caractéristiques, statiques ou évolutifs, de constituants de la scène virtuelle tridimensionnelle, soit d'une suite d'instructions informatiques ou ordres graphiques permettant de définir ladite scène.

9. Ensemble de captation selon la revendication 8, lequel comprend en outre des moyens de réception desdites données (24) représentatives de la scène, lesdites données (24) étant soit stockées dans des moyens de mémorisation locales, soit accessibles à distance via un réseau de communication.

10. Ensemble de captation selon la revendication 9, lequel comprend en outre un second module agencé pour intercepter directement des appels faits, par exemple à une carte ou une bibliothèque graphique, lesdits appels comprenant les données (24) représentatives de la scène et le second module étant adapté pour générer les images de synthèse à partir de ces données interceptées.

11. Ensemble de captation comprenant un système de génération d'une configuration (25) de captation selon l'une des revendications 1 à 6, **caractérisé en ce qu'**il comprend en outre dispositif (2) de captation simultanée d'une pluralité de nxm prises de vues comprenant couples (COCI) optique-capteur formés par nxm optiques (OPi) ayant chacune un axe optique (AO,) et un centre optique (CI) associés à des moyens (M) de positionnement utilisant la configuration (25) de captation pour le positionnement des capteurs (V1) et/ou des optiques (OPi) de chaque couple (COCi) optique-capteur.

12. Ensemble de captation comprenant un système de génération d'une configuration (25) de captation selon l'une des revendications 1 à 6, **caractérisé en ce qu'**il comprend en outre dispositif (3) de captation séquentielle d'une pluralité de nxm prises de vues vue d'une scène, la captation étant réalisée à l'aide d'une optique (Op) comportant un centre optique (C) et un axe optique (AO), montée sur au moins un support (S), le support (S) étant agencé pour le déplacement de l'optique (Op), le support (S) comprenant des moyens (M) de positionnement de l'ensemble optique-capteur dans une pluralité de positions successives (Pi) pour la captation de la pluralité de prises de vues correspondant aux zones de captation (ZCi) dans chacune des positions (Pi) successives.

## Patentansprüche

1. System (1) zur Erzeugung einer Konfiguration (25) zur Erfassung einer Vielzahl von Bildern einer Szene, wobei diese Bilder für eine Restitution auf mindestens einer Vorrichtung zur multiskopischen Restitution ausgelegt sind, wobei die Erfassung durch die Projektion der Szene auf eine Vielzahl von parallelen Erfassungsbereichen (ZCi) durchgeführt wird, die jeweils einem optischen Zentrum (CI) assoziiert sind, **dadurch gekennzeichnet, dass** es ein Modul (22) umfasst, das entworfen ist, um eine Konfiguration (25) zur Erfassung zu erzeugen, umfassend:

- repräsentative Daten der Positionierung der optischen Zentren (Ci), ausgedrückt in mindestens einer globalen Erfassungsmarkierung (27),
- repräsentative Daten der Abmessungen, der Positionierung in mindestens einer globalen Erfassungsmarkierung und der Ausrichtung der Erfassungsbereiche (ZCi), die mit den optischen Zentren (Ci) assoziiert sind, ausgehend von den folgenden Daten:
- repräsentativen Daten der Positionierung, der Ausrichtung und der eventuellen Bildung in der Szene der mindestens einen globalen Erfassungsmarkierung (27)
- repräsentativen Daten der Konfigurationsparameter (23), die eine parametrierbare Verformung definieren und Umwandlungen zwischen dem anfänglichen Raum der Szene und dem Restitutionsraum durch Folgendes definieren:
- mindestens einen Faktor k der globalen und insbesondere Tiefen-Vergrößerung;
- mindestens einen Parameter $\varepsilon$ der Kontrolle der potenziellen linearen Verformung,
- mindestens eine Rate $\mu$ der relativen Vergrößerung der Breite mit Bezug auf die Tiefe oder einen gewünschten Faktor der horizontalen/Tiefen-Anamorphose,
- mindestens eine Rate $\rho$ der relativen Vergrößerung der Höhe mit Bezug auf die Breite oder einen gewünschten Faktor der horizontalen/Tiefen-Anamorphose,
- mindestens eine Rate $\gamma$ der horizontalen Scherung des wahrgenommenen Reliefs,
- mindestens eine Rate $\delta$ der vertikalen Scherung des wahrgenommenen Reliefs durch einen eingebetteten Beobachter gemäß dem Erwarteten,

wobei die Transformationen durch den Ausdruck mit homogenen Koordinaten gekennzeichnet sind

$$a \begin{bmatrix} x_i \\ y_i \\ z_i \\ 1 \end{bmatrix} = k_i \begin{bmatrix} \mu_i & & \gamma_i & 0 \\ & \rho_i\mu_i & \delta_i & 0 \\ & & 1 & 0 \\ 0 & 0 & k_i(\varepsilon_i - 1)/d_i & \varepsilon_i \end{bmatrix} * \begin{bmatrix} X \\ Y \\ Z \\ 1 \end{bmatrix}$$

wobei X, Y, Z die Koordinaten der Punkte der Szene darstellen und $x_i$, $y_i$, $z_i$ diejenigen ihrer Entsprechungen darstellen, wahrgenommen durch einen Beobachter der Restitutionsvorrichtung,

- repräsentativen Daten von Restitutionsparametern (21) mit Bezug auf die multiskopische Restitutionsvorrichtung, umfassend:
- die Abmessungen eines nützlichen Bereichs der Restitutionsvorrichtung,
- privilegierte Beobachtungspositionen für die Restitutionsvorrichtung.

2. System nach Anspruch 1, **dadurch gekennzeichnet, dass** die repräsentativen Daten von mindestens einem Konfigurationsparameter (23) repräsentative Daten von mindestens einer Einheit von Parametern aus den folgenden Einheiten von Parametern umfassen:

- eine Einheit von Parametern (23a), genannt intern, zur Erfassung, die direkt die Erfassungsgeometrie durch mindestens die Positionen, gegenüber einer Markierung, die der virtuellen Erfassungsvorrichtung zu eigen ist, der optischen Zentren (Ci) definieren, die auf der (oder den) Ausfluchtungsgeraden (LCi2) der Zentren und den Positionen der Erfassungsbereiche (ZC) ausgefluchtet sind, parallel zwischen ihnen und derart ausgerichtet, dass ihre Linien parallel zu diesen Ausfluchtungsgeraden (LCi2) der Zentren sind,
- eine Einheit von Parametern (23b), genannt extern, zur Erfassung, die die Geometrie der Erfassung ausgehend vom Konvergenzpunkt (PS) definieren oder deren Identifizierung ermöglichen durch mindestens die Abmessungen der gemeinsamen Basis (BC), die auf den Konvergenzpunkt (PS) zentriert ist, die Positionierung der einen oder der mehreren Geraden (Lci2) der Ausfluchtung der Zentren, die Positionierung der optischen Zentren (Ci) auf diesen Ausfluchtungsgeraden (Lci2) der Zentren und der Position der parallelen Ebenen zur gemeinsamen Basis (BC), die die Erfassungsbereiche (ZCi) enthält.

3. System nach einem der Ansprüche 1 bis 2, **dadurch gekennzeichnet, dass** die repräsentativen Daten von mindestens einem Konfigurationsparameter (23) repräsentative Daten (23d) eines Parameters umfassen, der ein restituiertes Relief ohne jede Verformung mit Bezug auf das Relief der erfassten Szene definiert.

4. System nach einem der Ansprüche 1 bis 3, **dadurch gekennzeichnet, dass** die repräsentativen Daten von mindestens einem Konfigurationsparameter (23) repräsentative Daten von externen Parametern (23b) der folgenden Erfassungsgeometrie umfassen:

- mindestens einen Parameter, der mit Bezug auf die gemeinsame Basis (BC), die Positionierung der einen oder der mehreren Ausfluchtungsgeraden (Lci2) der Zentren definiert,
- mindestens einen Parameter, der die Positionierungen der optischen Zentren (CI) auf diesen Ausfluchtungsgeraden (Lci2) der Zentren definiert,
- mindestens einen Parameter, der direkt oder indirekt die Abmessungen der gemeinsamen Basis (BC) definiert,
- mindestens einen Parameter, der die genaue Position jeder parallelen Ebene zur gemeinsamen Basis (BC) definiert, die mindestens einen Erfassungsbereich (Zd) trägt.

5. System nach einem der Ansprüche 1 bis 4, **dadurch gekennzeichnet, dass** die repräsentativen Daten von mindestens einem Konfigurationsparameter (23) repräsentative Daten von internen Parametern (23a) der folgenden Erfassungsgeometrie umfassen:

- mindestens einen Parameter, der die Positionierungen der optischen Zentren (Ci) gegenüber einer Markierung definiert, die der Erfassung zu eigen ist.

- mindestens einen Parameter, der die Ausrichtung der Sichtachse (AV1) jeder Projektionspyramide (oder Hauptachse) definiert,
- mindestens einen Parameter, der die Geometrie der effektiven Projektionspyramide jedes Erfassungsbereichs (ZCi) definiert.

**6.** System nach einem der Ansprüche 1 bis 6, **dadurch gekennzeichnet, dass** alle oder ein Teil der Einheiten von Daten, ausgehend von denen das Konfigurationsmodul (22) die Konfiguration bestimmt, im Laufe der Zeit variabel sind, dank der Daten, die aus den Speichermitteln und/oder der internen oder externen Kommunikation und/oder der Benutzerschnittstelle stammen und mindestens eine vorübergehende Referenz (29) für die Änderung der repräsentativen Daten des oder der Konfigurationsparameter (23) und/oder der repräsentativen Daten (27) der globalen Erfassungsmarkierung und/oder der repräsentativen Daten (21) der Restitutionsvorrichtung definieren, insbesondere der gewählten Beobachtungspositionen.

**7.** Erfassungseinheit, umfassend ein System zur Erzeugung einer Erfassungskonfiguration (25) nach einem der vorhergehenden Ansprüche, **dadurch gekennzeichnet, dass** sie außerdem ein Modul zur Synthese von Bildern (MSI) umfasst, das die Erfassungskonfiguration (25) für die Positionierungen der nxm optischen Zentren (d) und der Abmessungen und Positionierungen der nxm Erfassungsbereiche (ZCi) mit Bezug auf eine virtuelle Szene zur Erzeugung von nxm Bildern oder Sequenzen von Bildern der virtuellen Szene verwendet, wobei die Szene statisch oder dynamisch ist.

**8.** Erfassungseinheit nach Anspruch 7, wobei das Modul zur Synthese von Bildern (MSI) ausgelegt ist, um auch repräsentative Daten (24) der Szene zu verwenden, entweder der Positionierungen und statischen oder evolutiven Eigenschaften von Bestandteilen der dreidimensional virtuellen Szene, oder einer Folge von Computeranweisungen oder graphischen Befehlen, die ermöglichen, die Szene zu definieren.

**9.** Erfassungseinheit nach Anspruch 8, die außerdem Mittel zum Empfang der repräsentativen Daten (24) der Szene umfasst, wobei die Daten (24) entweder in den lokalen Speichermitteln gespeichert sind oder über ein Kommunikationsnetz den Fernzugriff ermöglichen.

**10.** Erfassungseinheit nach Anspruch 9, die außerdem ein zweites Modul umfasst, das angeordnet ist, um direkte Anrufe abzufangen, die z.B. an eine Karte oder eine graphische Bibliothek erfolgen, wobei die Anrufe die repräsentativen Daten (24) der Szene umfassen und das zweite Modul ausgelegt ist, um die Synthesebilder ausgehend von den abgefangenen Daten zu erzeugen.

**11.** Erfassungseinheit, umfassend ein System zur Erzeugung einer Erfassungskonfiguration (25) nach einem der vorhergehenden Ansprüche 1 bis 6, **dadurch gekennzeichnet, dass** sie außerdem eine Vorrichtung (2) zur gleichzeitigen Erfassung einer Vielzahl von nxm Ansichten umfasst, umfassend Optik-/Sensoer-Paare (COCI), die durch nxm Optiken (Opi) gebildet sind, die jeweils eine optische Achse (AO,) und ein optisches Zentrum (CI) aufweisen, die mit Positionierungsmitteln (M) assoziiert sind, die die Erfassungskonfiguration (25) für die Positionierung der Sensoren (V1) und/oder der Optiken (Opi) jedes Optik-Sensor-Paars (COCi) verwenden.

**12.** Erfassungseinheit, umfassend ein System zur Erzeugung einer Erfassungskonfiguration (25) nach einem der Ansprüche 1 bis 6, **dadurch gekennzeichnet, dass** sie außerdem eine Vorrichtung (3) zur sequenziellen Erfassung einer Vielzahl von nxm Ansichten einer Szene umfasst, wobei die Erfassung mit Hilfe einer Optik (Op) durchgeführt wird, umfassend ein optisches Zentrum (C) und eine optische Achse (AO), die auf mindestens einen Träger (S) montiert ist, wobei der Träger (S) für die Verschiebung der Optik (Op) angeordnet ist, wobei der Träger (S) Mittel (M) zur Positionierung der Optik-Sensor-Einheit in einer Vielzahl von aufeinander folgenden Positionen (Pi) für die Erfassung der Vielzahl von Ansichten umfasst, die den Erfassungsbereichen (ZCi) in jeder der aufeinander folgenden Positionen (Pi) entspricht.

**Claims**

**1.** System (1) for generating a configuration (25) for capturing a plurality of a plurality of images of a scene, said images being intended for restitution on at least one multiscopic restitution device, the capture being made by projecting the scene on a plurality of parallel capture areas (ZCi) each associated with an optical centre (CI), **characterised in that** it comprises a module (22) adapted for generating a capture configuration (25) comprising:

- data representative of the positioning of the optical centres (Ci), expressed in at least one comprehensive capture reference (27),
- data representative of the dimensions of the positioning in the at least one comprehensive capture reference, and of the orientation of the capture areas (ZCi) associated with the optical centres (Ci),

from the following data:

- data representative of the positioning, orientation and optional conformation in the scene of the at least one comprehensive capture reference (27),
- data representative of configuration parameters (23) defining a configurable deformation and defining transformations between the initial space of the scene and the restitution space by:

-- at least one comprehensive magnification factor k and in particular with regard to depth,
-- at least one parameter $\varepsilon$ for controlling the potential non-linear deformation,
-- at least one relative magnification rate $\mu$ of the width in relation to the depth or desired horizontal/depth anamorphic factor,
-- at least one relative magnification rate $\rho$ of the height in relation to the width or desired vertical/horizontal anamorphic factor,
-- at least one horizontal shearing rate $\gamma$ of the perceived relief,
-- at least one vertical shearing rate $\delta$ of the relief perceived by a pitch observer conform to that expected,

said transformations are **characterised by** the expression in homogeneous coordinates

$$a \begin{bmatrix} x_i \\ y_i \\ z_i \\ 1 \end{bmatrix} = k_i \begin{bmatrix} \mu_i & & \gamma_i & 0 \\ & \rho_i \mu_i & \delta_i & 0 \\ & & 1 & 0 \\ 0 & 0 & k_i(\varepsilon_i - 1)/d_i & \varepsilon_i \end{bmatrix} * \begin{bmatrix} X \\ Y \\ Z \\ 1 \end{bmatrix}$$

whereby X, Y, Z represent the coordinates of the points of the scene and $x_i$, $y_i$, $z_i$ represent those of their counterparts perceived by an observer of the restitution device,

- data representative of restitution parameters (21) in relation to the multiscopic restitution device, comprising:

-- the dimensions of a useful area of the restitution device,
-- the privileged observation positions for the restitution device.

2. System according to claim 1, **characterised in that** the data representative of at least one configuration parameter (23) comprises data representative of at least one set of parameters from among the following sets of parameters:

- a set of capture parameters (23a), known as internal, directly defining the capture geometry by at least the positions, with regard to a reference specific to the virtual capture device, of the optical centres (Ci) aligned on the line(s) (LCi2) of alignment of the centres and the positions of the capture areas (ZC), parallel to each other and directed such that their lines are parallel to these lines (LCi2) of alignment of the centres,
- a set of capture parameters (23b), known as external, defining or enabling the identification of the capture geometry from the point of convergence (PS), by at least the dimensions of the common base (BC) centred on the point of convergence (PS), the positioning of the line(s) (LCi2) of alignment of the centres, the positioning of the optical centres (Ci) on these lines (LCi2) of alignment of the centres and the position of the planes parallel to the common base (BC) containing the capture areas (ZCi).

3. System according to one of claims 1 to 2, **characterised in that** the data representative of at least one configuration parameter (23) comprises data (23d) representative of a parameter defining a relief restituted without any deformation in relation to the relief of the scene captured.

**4.** System according to one of claims 1 to 3, **characterised in that** the data representative of at least one configuration parameter (23) comprises data representative of the following external capture geometry parameters (23b):

- at least one parameter defining, relatively to the common base (BC), the positioning of the line(s) (LCi2) of alignment of the centres,
- at least one parameter defining the positionings of the optical centres (CI) on these lines (LCi2) of alignment of the centres,
- at least one parameter directly or indirectly defining the dimensions of the common base (BC),
- at least one parameter defining the exact position of each plane parallel to the common base (BC) having at least one capture area (Zd).

**5.** System according to one of claims 1 to 4, **characterised in that** the data representative of at least one configuration parameter (23) comprises data representative of the following internal capture geometry parameters (23a):

- at least one parameter defining the positionings of the optical centres (Ci) with regard to a reference specific to the capture,
- at least one parameter defining the orientation of the visual axis (AV1) of each projection pyramid (or main axis),
- at least one parameter defining the geometry of the effective projection pyramid of each capture area (ZCi).

**6.** System according to one of claims 1 to 5, **characterised in that** all or part of the sets of data from which the configuration module (22) determines said configuration are variable in time, thanks to data originating from the internal or external storage and/or communication means and/or the user interface and defining at least one time reference (29) for the change in data representative of the configuration parameter(s) (23) and/or data (27) representative of the comprehensive capture reference and/or data (21) representative of the restitution device, in particular the selected observation positions.

**7.** Capture assembly comprising a system for generating a capture configuration (25) according to one of the previous claims, **characterised in that** it further comprises an image synthesis module (MSI) using the capture configuration (25) for the positionings of the nxm optical centres (d) and the dimensions and positionings of the nxm capture areas (ZCi) in relation to a virtual scene for the generation of nxm images or image sequences of the virtual scene, said scene being static or dynamic.

**8.** Capture assembly according to claim 7, wherein the image synthesis module (MSI) is adapted to also use data (24) representative of the scene, either on the static or evolving positionings and properties of the components of the three-dimensional virtual scene, or on a sequence of computer instructions or graphic orders enabling said scene to be defined.

**9.** Capture assembly according to claim 8, further comprising means for receiving said data (24) representative of the scene, said data (24) being either stored in local storage means or accessible remotely via a communication network.

**10.** Capture assembly according to claim 9, further comprising a second module arranged to directly intercept calls made, for example to a card or a graphics library, said calls comprising data (24) representative of the scene and the second module being adapted to generate the synthesis images from this intercepted data.

**11.** Capture assembly comprising a system for generating a capture configuration (25) according to one of claims 1 to 6, **characterised in that** it further comprises a device (2) for simultaneously capturing a plurality of nxm shots comprising lens-sensor couples (COCI) formed from nxm lenses (OPi), each having an optical axis (AO) and an optical centre (CI) associated with positioning means (M) using the capture configuration (25) for the positioning of the sensors (V1) and/or the lenses (OPi) of each lens-sensor couple (COCi).

**12.** Capture assembly comprising a system for generating a capture configuration (25) according to one of claims 1 to 6, **characterised in that** it further comprises a device (3) for the sequential capture of a plurality of nxm shots of a scene, the capture being made using a lens (Op) comprising an optical centre (C) and an optical axis (AO), mounted on at least one support (S), the support (S) being arranged to allow for the movement of the lens (Op), the support (S) comprising means (M) for positioning the lens-sensor assembly in a plurality of successive positions (Pi) for the capture of the plurality of shots corresponding to the capture areas (ZCi) in each of the successive positions (Pi).

EP 2 406 962 B1

**FIG. 1**

FIG. 2

**FIG. 3**

EP 2 406 962 B1

FIG. 4A

FIG. 4B

**FIG. 5**

Dispositif de restitution multiscopique

13 · 1 · 22 · MSI · MX · 12 · 11 · 24 · 27 · 29 · DR · DX · 28 · 21 · 23b · 23a · 23 · 23c · 23d · 25 · 25i

FIG. 6

EP 2 406 962 B1

**FIG. 7**

FIG. 8

EP 2 406 962 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1089573 A
- WO 2005112474 A
- US 2001033327 A
- EP 0425985 A
- EP 1085769 A
- US 4724449 A

**Littérature non-brevet citée dans la description**

- **JONES GRAHAM ; LEE DELMAN ; HOLLIMAN NICOLAS ; EZRA DAVID.** Controlling perceived depth in stereoscopic images. *Proc. SPIE Stereoscopic Displays and Virtual Reality Systems VIII et Detlef Runde*
- **MOTION PARALLAX.** IEEE Transations On Circuits and Systems for Video Technology. IEEE Service Center